(19) Europäisches Patentamt / European Patent Office / Office européen des brevets

(11) **EP 3 232 151 B1**

(12) **EUROPEAN PATENT SPECIFICATION**

(45) Date of publication and mention of the grant of the patent:
**25.12.2019 Bulletin 2019/52**

(21) Application number: **16725345.9**

(22) Date of filing: **14.04.2016**

(51) Int Cl.:
*G01B 11/245* (2006.01)  *G01B 11/24* (2006.01)
*G01C 11/00* (2006.01)  *H04N 13/00* (2018.01)
*G06T 7/73* (2017.01)  *G06T 7/593* (2017.01)
*G06T 7/557* (2017.01)  *G01B 11/03* (2006.01)

(86) International application number:
**PCT/CN2016/079274**

(87) International publication number:
**WO 2017/124654 (27.07.2017 Gazette 2017/30)**

(54) **THREE-DIMENSIONAL MEASUREMENT SYSTEM AND MEASUREMENT METHOD FOR FEATURE POINT BASED ON PLANE OF FOUR-CAMERA SET ARRAY**

DREIDIMENSIONALES MESSSYSTEM UND MESSVERFAHREN FÜR MERKMALSPUNKT AUF DER BASIS EINER EBENE EINER VIERKAMERASATZANORDNUNG

SYSTÈME DE MESURE EN TROIS DIMENSIONS ET PROCÉDÉ DE MESURE DE POINT CARACTÉRISTIQUE SUR LA BASE DU PLAN D'UN RÉSEAU DE QUATRE APPAREILS DE PRISE DE VUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2016 CN 201610046181**
**08.03.2016 CN 201610131645**

(43) Date of publication of application:
**18.10.2017 Bulletin 2017/42**

(73) Proprietor: **Beijing Qingying Machine Visual Technology Co., Ltd.**
**Beijing City 100089 (CN)**

(72) Inventor: **YIN, Xing**
**Changzhou City, Jiangsu 213000 (CN)**

(74) Representative: **Kolster Oy Ab**
**(Salmisaarenaukio 1)**
**P.O. Box 204**
**00181 Helsinki (FI)**

(56) References cited:
**WO-A1-2011/118839      WO-A1-2015/153007**
**CN-A- 102 447 934      CN-A- 102 679 961**
**CN-A- 104 717 481      CN-A- 104 748 683**
**CN-A- 104 748 683      CN-B- 102 447 934**
**US-A1- 2010 150 455      US-A1- 2014 267 245**
**US-A1- 2015 042 767**

- **Anonymous: "Image rectification - Wikipedia, the free encyclopedia", , 12 December 2014 (2014-12-12), XP055208111, Retrieved from the Internet: URL:https://en.wikipedia.org/wiki/Image_re ctification [retrieved on 2015-08-17]**
- **YANG, YONG ET AL.: 'Parameter Matching of Three Dimensional Display Based on Space of Corresponding Image Point Transformation' OPTICS AND PRECISION ENGINEERING vol. 20, no. 5, 31 May 2012, pages 1084 - 1089, XP009500742**

**Description**

**Technical Field**

The present invention relates to a feature-point three-dimensional measuring system of a planar array of a four-camera group and a measuring method, pertaining to the technical field of products and methods of optical electronic measuring technologies, and particularly to the technical field of methods of measuring the position and dimension of coordinates of a three-dimensional feature point of a measured object in a manner of image processing using a digital camera group and calculating cloud data of three-dimensional location coordinate points of a feature point of a viewed object.

**Background Technology**

Currently, below are manners and problems of three-dimensional measurement which quickly and accurately calculates cloud data of three-dimensional location coordinate points of a feature point of a viewed object to further realize three-dimensional stereoscopic quick and precise measurement of full external dimensions of the viewed object.

I. Single-point vision measuring method

We can regard all kinds of contactless length measuring sensors as single-point vision; typical examples are e.g. a laser ranging sensor and a laser scanner superimposed with a high-speed scanning function.
With single-point high-speed scanning, the single-point vision can be used to produce a three-dimensional stereoscopic vision system, but disadvantages of such a system are that morphology characteristics of a whole measured object cannot be quickly and fully grasped, and in dynamic measurement, a quickly moving object has deformation, easily resulting in measuring blind spots; at the same time, a processing speed and an algorithm of cloud data of three-dimensional points need to be further improved.

II. Planar vision measuring method

For planar vision, various types of cameras are mainly used for two-dimensional imaging. Currently, various types of cameras, video cameras, video surveillance and so on are widely used. Two-dimensional image on-line measurement is widely used in assembly line test of various kinds of specific objects, such as printing and packaging line quality test and product quality and appearance test and so on.
An object within a view field can be one-time imaged through the two-dimensional imaging, and the object is subject to test and intelligent processing through edge classification algorithm. Its biggest problem is that it is hard to directly calculate physical dimensions of the object according to the plane image. For a three-dimensional test, if only independent image analysis is carried out, it can only make qualitative analysis of the plane exterior profile.

III. Three-dimensional vision measurement

At present, a device which can really realize direct acquisition of three-dimensional data has not yet appeared, the so-called three-dimensional vision is formed through combination of related devices and technologies of one-dimensional and two-dimensional vision; the three-dimensional vision and measuring technologies mainly include the following types:

□ . Optical screenshot technology and line laser measurement

Optical screenshot technology and line laser measurement address the three-dimensional measurement by changing it into a two-dimensional problem through establishment of a laser plane. One laser plane is generated by one line laser generator, and an image is subject to a binarization process after imagined by a digital camera arranged at a certain angle with this plane, an image of an intersecting line of the measured object and this laser line is obtained. This laser plane and pixels of the two-dimensional image have a unique corresponding relationship. Accurate measurement of a laser cut line of the object can be realized through calibration. Currently, a line laser range finder can directly measure distances of various points on a laser line, mainly using this method.

□ . Binocular or multi-view vision measuring technology

The reason why the human eye can quickly determine a distance and a size of a viewed object is that human beings have two eyes which have a fixed distance and which can simultaneously dynamically adjust a focal length and an angle, and also have one brain whose computing speed is hardly matched by the fastest computer at present. If two cameras with a fixed distance and focal length image the same object at the same time, with respect to the same measured point of the measured object there is a unique corresponding relationship between images which they form. This is the principle of the binocular vision measurement. Currently, 3D movies substantially use this method for shooting and stereoscopic reproduction. For example, CN102447934B discloses a synthetic method of stereoscopic elements in a combined stereoscopic image system collected by a sparse lens, and belongs to the technical field for generating stereoscopic images. The method comprises the following steps of: arranging a sparse camera matrix; calculating optical parallax image between each shot image and an adjacent horizontal image and between each shot image and an adjacent vertical image; expanding a binocular stereoscopic vision model into a multi-eye stereoscopic vision model, and calculating spatial location coordinates of actual object points corresponding to the pixel points in each image according to a horizontal parallax image and a vertical parallax image of each image; transforming the spatial location coordinates of the actual object points corresponding to the pixel points calculated in all images into the same coordinate system; virtually simulating a camera array, projecting the actual object points corresponding to the pixel points in each image under the same coordinate system to each virtual camera to generate sub-images; interpolating the points without being filled; and generating a stereoscopic element image. US2010/150455A1 discloses a compound eye imaging apparatus, including a standard imaging optical system generating a picture including a standard image; reference imaging optical systems of an even number equal to or larger than two arranged substantially point-symmetrically with respect to the standard imaging optical system, which generate an picture including a reference image; a correlation value calculation unit calculating a correlation value for each shifting amount by which one of the reference images is shifted parallel to a baseline, with respect to the standard image, for each of the reference imaging optical systems of an even number equal to or larger than two; a correlation value addition unit calculating an integrated correlation value by adding, to each corresponding shifting amount, the correlation value calculated for each of said reference imaging optical systems of an even number equal to or larger than two; and a disparity calculation unit calculating a disparity that is a shifting amount resulting in the largest degree of similarity between the standard image and the reference image. US2015042767A1 discloses a camera array comprising a plurality of cameras configured to capture images of a scene from different viewpoints in complementary occlusion zones around a reference viewpoint; a processor; and memory containing an image processing application. The image processing application stored in memory directs the processor to: separately configure the imaging parameters for each of the plurality of cameras; read out image data from the plurality of cameras including a set of images captured from different viewpoints; store the image data in the memory; normalize the set of images to increase the similarity of corresponding pixels within the set of images; determine initial depth estimates for pixel locations in an image from the reference viewpoint based upon the disparity at which corresponding pixels in the set of images have the highest degree of similarity; compare the similarity of the corresponding pixels in the set of images to detect mismatched pixels; when an initial depth estimate does not result in the detection of a mismatch between corresponding pixels in the set of images, selecting the initial depth estimate as the depth estimate for the pixel location in the image from the reference viewpoint; and when an initial depth estimate results in the detection of a mismatch between corresponding pixels in the set of images, updating the depth estimate for the pixel location in the image from the reference viewpoint by determining a set of candidate depth estimates using a plurality of competing subsets of the set of images based upon the disparities at which corresponding pixels in each of a plurality of competing subsets of images have the highest degree of similarity, where the competing subsets correspond to patterns of visibility within the scene, and selecting the candidate depth of the subset having the corresponding pixels with the highest degree of similarity as the updated depth estimate for the pixel location in the image from the reference viewpoint. WO2011118839A1 discloses a system for measuring and processing dental replacements which includes an image data producing means for producing the image data of an object (a measured object) in the oral cavity by measuring the object in a still-image-like manner. The system also includes a supporter which has a fixing portion for fixedly positioning the image data producing means so as to allow the three-dimensional shape of the measured object to be measured during measurements. The supporter is sized to be insertable into the oral cavity. The system further includes a three-dimensional shape data acquirement means for acquiring the three-dimensional shape of the measured object from the photographed information acquired by the image data producing means. US2014267245 A1 discloses a disparity map generator comprising a generator configured to generate a first depth/disparity map estimate between a first pair of views of a scene and a second depth/disparity map estimate between a second pair of views of this scene, with the generation of the first depth/disparity map estimate and the second depth/disparity map estimate, respectively, being independent from each other and the first and second pair of views being different from each other; and comparator configured to compare the first depth/disparity map estimate and the second depth/disparity map estimate so as to acquire a reliability measure for the first depth/disparity map estimate and/or the second depth/disparity map estimate. CN104748683A discloses a method for online and automatic measuring numerical control machine tool workpieces including: on the basis of multiscale Gabor filtering, utilizing a vertical line of a direction corresponding to a maximum value of Gabor filtering values of different directions to determine normal direction of a central line of light in an image;

acquiring sub-pixel-level position of the center of a light bar by solving an extreme point of Gaussian fitting in the normal direction; generating a group of control points in space by calculating an angular point of the center of the light bar of light, calculating three-dimensional world coordinates (xi, yi and zi) of the control points at the same time, and providing the three-dimensional world coordinates of the control points and two-dimension image coordinates of imaging points of the control points; applying central line dominating point pair to build a model algorithm for three-dimensional matching.

For the binocular vision, because there are still difficulties in the current technologies of the extraction of edge features of an object and the binocular pixel matching algorithm, it is hard to quickly and accurately match the binocular images, the binocular or multi-view vision measurement has not yet been used on a large scale, and products with direct binocular measurement and image recognition have not been seen by far.

Summary of the Invention

The invention is defined in the appended claims.

The present invention provides a feature-point three-dimensional measuring system of a planar array of a four-camera group and measuring method , so as to realize an target of simply, quickly, accurately, and directly measuring three-dimensional dimensions of an object with a multi-view camera.

In order to achieve the target, technical solutions and methods used in the present invention are as follows:

a feature-point three-dimensional measuring system of a planar array of a four-camera group comprises at least one four-camera group, the group formed by four digital cameras, wherein;

a four-camera group formed by four digital cameras is arranged in a form of a $2\times2$ array;

the four digital cameras comprise a camera a, a camera b, a camera c, and a camera d, wherein the camera a, the camera b, the camera c, and the camera d are arranged on the same plane;

focal points $O_a$, $O_b$, $O_c$, and $O_d$ on imaging optical axes of the four cameras, the camera a, the camera b, the camera c, and the camera d, are on the same plane and form one rectangular shape, forming a rectangular plane; all of imaging optical axis central lines of the four cameras, the camera a, the camera b, the camera c, and the camera d, are perpendicular to the rectangular plane;

the four cameras, the camera a, the camera b, the camera c, and the camera d, are of identical models and have identical lenses;

the camera a is located on a position horizontal to the camera b, and the camera c is located on a position horizontal to the camera d;

the camera a is located on a position vertical to the camera c and the camera b is located on a position vertical to the camera d.

The four-camera group formed by the four digital cameras is formed by four digital cameras where a focal point on an imaging optical axis of a chosen camera and focal points on imaging optical axes of three adjacent cameras form one rectangular shape, forming a rectangular plane, and all of the imaging optical axis central lines of the four cameras are perpendicular to the rectangular plane.

The four-camera group is provided in a form of $2\times3$, $2\times4$, $2\times5$, $3\times2$, $3\times3$, $3\times4$, $3\times5$ or $4\times4$ array.

At least one vertical laser and at least one horizontal laser are further comprised, wherein the vertical laser is configured to be located on a perpendicular bisector of a connecting line of $O_a$ and $O_b$, and the horizontal laser is configured to be located on a perpendicular bisector of a connecting line of $O_a$ and $O_c$.

In the four-camera group, the cameras have sensors of a type of 2/3" CMOS, a pixel dimension of 5.5 $\mu$m, a resolution of $1024\times2048$, and a focal length of lens of 25 millimeter.

In the four-camera group, a distance between two adjacent cameras in a horizontal direction is m, and a distance between two adjacent cameras in a vertical direction is n, wherein a range of the m is 50-100 millimeter, and a range of the n is 50-100 millimeter.

A measuring method based on the three-dimensional measuring system mentioned above comprises specific steps as follows:

step 1: establishing a measuring system according to a three-dimensional vision measuring method of a planar array of a four-camera group, wherein

a prime principle of establishing the measuring system is: there are provided four or more identical cameras, whose optical axes are parallel, and whose focal points are on a same plane and capable of forming one rectangular shape;

for the selection of dimensions of the rectangular shape and parameters of the cameras and the lenses, mainly considering factors are accuracy of the measuring system and a size of a measured object; wherein when high measuring accuracy is required, it is needed to improve the resolution of the cameras and increase the focal length of the lenses; at the same time, it is needed to ensure that the measured object is capable of simultaneously having corresponding imaging points on the four cameras, and if the measured object is out of the imaging range, it also can be considered to increase the measuring cameras in pair, forming an array of the measuring cameras;

step 2: after acquisition of images is completed, performing a matching operation for a feature point of the images of the camera group, wherein
In the binocular stereoscopic vision measurement, stereoscopic matching means that one of the imaging points is known and a corresponding point of this imaging point is found on another image. Epipolar geometric constraint is a common matching constraint technology. We connect three points, the measured point and the imaging points on the corresponding images, to form one plane. Intersecting lines of this plane with the two images in the imaging space are called as epipolar by us. A constraint condition of epipolar is that the matching point(s) must be located on the epipolar.
As to the epipolar algorithm, since in the three-dimensional vision measuring method of a planar array of a four-camera group, the optical axes of the cameras are parallel, and the focal points form a rectangular shape on the same plane, the epipolar is directly simplified as a straight line parallel to the X axis or the Y axis, that is to say, all corresponding projection points of the measured object on respective imaging planes are on the straight line parallel to the X axis or the Y axis; thus, when performing the matching operation, full matching can be carried out for all measured points of the measured object, by directly translating, superimposing, and comparing, point by point, the pixel points of measured images of each pair in X-axis and Y-axis directions;
in the matching operation, it is required to make the matching operations on the images of the four-camera group, finding out all feature points whose spatial locations need to be calculated, and if a camera array having more than four cameras is used for measurement, different matching operations should be performed in different four-camera groups respectively;

step 3: according to matched feature point image coordinates, calculating coordinates of a spatial location of the feature point, wherein
the matched feature point image coordinates are put into coordinate expressions of any feature point $P_N$ in a space of the measured object, to calculate coordinates of spatial locations of respective feature points;
according to calculation formulas of the spatial location of the feature point, a width dimension of the measured object is calculated through matched feature points between two pairs of horizontal cameras, a height dimension of the measured object is calculated through matched feature points between two pairs of vertical cameras, and a length dimension of the measured object is calculated through matched feature points between two pairs of horizontal cameras and two pairs of vertical cameras, wherein all of the dimensions above, having a redundant feature, are compared and analyzed on redundant data, improving measuring accuracy and precision rate;

step 4: according to obtained coordinates of the spatial locations of respective feature points, calculating other three-dimensional dimensions of the measured object which need to be specially measured to form three-dimensional point cloud data and establish a three-dimensional point cloud graph for performing three-dimensional stereoscopic reproduction.

In the step 1, parameters of the cameras and the lenses, and the length and width dimensions of the rectangular shape are selected based on:

when a measuring distance is unchanged, the larger a volume of the measured object, the shorter the focal lengths required by the lenses; when the measuring distance is increased, a measurable range is also correspondingly increased;

a measuring resolution is improved in a way of: improving the resolutions of the cameras, decreasing the measuring distance, and in a condition that the measuring distance is unchanged, decreasing values of the focal lengths, and increasing dimensions of an array of centers of the optical axes of the four-camera group.

In the step 3, formulas of calculating coordinates of the spatial location of respective feature point are:

with a central point O of a rectangular plane of the focal points $O_a$, $O_b$, $O_c$, and $O_d$ of a group of four cameras, the camera a, the camera b, the camera c, and the camera d, serving as an origin, setting a triangular coordinate system of the space of the measured object, wherein X is a horizontal direction, Y is a vertical direction, and Z is a length or depth direction;

coordinates of a spatial location of a same point, point $P_1$, of the measured object are $P_1$ ($P_{1x}$, $P_{1y}$, $P_{1z}$), and corresponding imaging points of the spatial three-dimensional coordinates of the point $P_1$ in the group of four cameras, the camera a, the camera b, the camera c, and the camera d are $P_{1a}$ ($P_{1ax}$, $P_{1ay}$), $P_{1b}$ ($P_{1bx}$, $P_{1by}$), $P_{1c}$ ($P_{1cx}$, $P_{1cy}$), and $P_{1d}$ ($P_{1dx}$, $P_{1dy}$), relational expressions of location coordinates are as follows:

a horizontal operation formula of the camera a and the camera b:

$$P_{1x} = \frac{m\,(P_{1ax} + P_{1bx})}{2\,(P_{1bx} - P_{1ax})},$$

a horizontal operation formula of the camera c and the camera d:

$$P_{1x} = \frac{m\,(P_{1cx} + P_{1dx})}{2\,(P_{1dx} - P_{1cx})},$$

a vertical operation formula of the camera a and the camera c:

$$P_{1y} = \frac{n\,(P_{1cy} + P_{1ay})}{2\,(P_{1cy} - P_{1ay})},$$

a vertical operation formula of the camera b and the camera d:

$$P_{1y} = \frac{n\,(P_{1by} + P_{1dy})}{2\,(P_{1dy} - P_{1by})},$$

a depth operation formula of the camera a and the camera b:

$$P_{1z} = \frac{mf}{P_{1ax} - P_{1bx}},$$

a depth operation formula of the camera c and the camera d:

$$P_{1z} = \frac{mf}{P_{1cx} - P_{1dx}},$$

a depth operation formula of the camera a and the camera c:

$$P_{1z} = \frac{nf}{P_{1ay} - P_{1cy}},$$

and
a depth operation formula of the camera b and the camera d:

$$P_{1z} = \frac{nf}{P_{1by} - P_{1dy}},$$

wherein, m is an $O_aO_b$ length and n is an $O_aO_c$ length of the rectangular plane, and f is the focal length of the four cameras.

In the step 3, a general expression for calculating coordinates of a feature point, the spatial location coordinates of $P_N$, is:

$$P_N (P_{Nx}, P_{Ny}, P_{Nz}), \text{ where } N=1,2,3,4,5,\ldots\ldots$$

$$= \begin{cases} P_{Nx} = \dfrac{m(P_{Nax}+P_{Nbx})}{2(P_{Nbx}-P_{Nax})} = \dfrac{m(P_{Ncx}+P_{Ndx})}{2(P_{Ndx}-P_{Ncx})} \\[2mm] P_{Ny} = \dfrac{n(P_{Ncy}+P_{Nay})}{2(P_{Ncy}-P_{Nay})} = \dfrac{n(P_{Nby}+P_{Ndy})}{2(P_{Ndy}-P_{Nby})} \\[2mm] P_{Nz} = \dfrac{mf}{P_{Nax}-P_{Nbx}} = \dfrac{mf}{P_{Ncx}-P_{Ndx}} = \dfrac{nf}{P_{Nay}-P_{Ncy}} = \dfrac{nf}{P_{Nby}-P_{Ndy}} \end{cases},$$

wherein

let the focal points of the four cameras, the camera a, the camera b, the camera c, and the camera d, be $O_a$, $O_b$, $O_c$, and $O_d$, wherein the focal points $O_a$, $O_b$, $O_c$, and $O_d$ are on the same plane and form one rectangular plane, wherein let the $O_aO_b$ length of the rectangular plane be m and the $O_aO_c$ length be n, and the optical axes of the four cameras are parallel to each other and perpendicular to the rectangular plane; the group of four cameras, the camera a, the camera b, the camera c, and the camera d, use identical camera for imaging, and also identical lenses, with the focal length thereof set to be f;

setting a rectangular coordinate system of the space of the measured object, taking the central point O of the rectangular plane of $O_a$, $O_b$, $O_c$, and $O_d$ as the origin, wherein X is a horizontal direction parallel to an edge $O_aO_b$ of the rectangular shape, Y is a vertical direction parallel to an edge $O_aO_c$ of the rectangular shape, and Z is a length or depth direction and points towards the measured object;

let any feature point in the measured object be $P_N$, and coordinates of projection points of $P_N$ on imaging planes of the group of four cameras, the camera a, the camera b, the camera c, and the camera d, be $P_{Na}$ ($P_{Nax}$, $P_{Nay}$), $P_{Nb}$ ($P_{Nbx}$, $P_{Nby}$), $P_{Nc}$ ($P_{Ncx}$, $P_{Ncy}$), and $P_{Nd}$ ($P_{Ndx}$, $P_{Ndy}$), and then, let coordinates of a spatial location of the point $P_N$ be $P_N$ ($P_{Nx}$, $P_{Ny}$, $P_{Nz}$).

By using the technical solutions and the methods of the present invention, since four or more digital cameras are arranged in a rectangular array on the same plane, after the multi-view matching algorithm is completed and respective corresponding feature points are found out, coordinates of a three-dimensional location of the feature point of the viewed object are quickly and accurately calculated using the methods, to further realize quick and accurate three-dimensional stereoscopic measurement of all the external dimensions of the viewed object. Apart from being capable of quickly calculating the three-dimensional coordinates of the feature point, since the arrangement of the planar array of the four-camera group is used, the methods can greatly simplify the matching algorithm of the feature point.

The technical solutions and the methods of the present invention have the following advantages:

1. The three-dimensional vision measuring method of a planar array of a four-camera group can calculate the three-dimensional stereoscopic coordinates of the same point of the measured object according to changes of positions of the imaging points of the same point of the measured object in different cameras, wherein horizontal dimensions are calculated by two pairs of horizontally arranged cameras, vertical dimensions are calculated by two pairs of vertically arranged cameras, and depth dimensions can be calculated by both two pairs of horizontal cameras and two pairs of vertical cameras.

2. The three-dimensional vision measuring method of a planar array of a four-camera group can calculate the three-dimensional stereoscopic data of the feature point of the measured object just through simple algebraic calculations between the feature point image coordinates. The calculation accuracy of the coordinates of the same point of the measured object is only related to the camera accuracy and resolution, mutual positional accuracy and distance of the cameras. Compared with the existing optical screenshot algorithm and other algorithms which need calibration in advance, it is not needed to use complex calibration formulas, greatly simplifying the calculation of the spatial dimensions, at the same time, preventing errors appearing to a calibrator and in a calibration process from being put into measurement results.

3. The three-dimensional vision measuring method of a planar array of a four-camera group belongs to a multi-camera redundant and specifically structured arrangement method. As to algorithm of an epipolar in the binocular vision matching algorithm, the epipolar is directly simplified as a straight line parallel to an X axis and a Y axis, that is to say, all corresponding projection points of the measured object on respective imaging planes are on the straight line parallel to the X axis and the Y axis. We can make full matching for all measured points of the measured object, by directly translating, superimposing, and comparing, point by point, the pixel points of measured images of each pair in X-axis and Y-axis directions. This method can greatly simplify the complex algorithm of binocular matching.

**Brief Description of Drawings**

Fig. 1 is a plan schematic view of arrangement of planar four-camera group array of the present invention;

Fig. 2 is a perspective schematic view of the planar four-camera group array plane of the present invention;

Fig. 3 is a schematic view of arrangement of a coordinate system of arrangement of the planar four-camera group array of the present invention;

Fig. 4 is a perspective schematic view of calculating horizontal dimensions of the four-camera group array of the present invention;

Fig. 5 is a plan schematic view of calculating horizontal dimensions of the four-camera group array of the present invention;

Fig. 6 is a perspective schematic view of calculating vertical dimensions of the four-camera group array of the present invention;

Fig. 7 is a plan schematic view of calculating vertical dimensions of the four-camera group array of the present invention;

Fig. 8 is a schematic view of arrangement of a three-dimensional measuring system of a 3x2 camera array of the present invention;

Fig. 9 is a top view of arrangement of a three-dimensional measuring system of the $3\times2$ camera array of the present invention;

Fig. 10 is a side view of arrangement of a three-dimensional measuring system of the 3x2 camera array of the present invention.

**Detailed Description of Embodiments**

Below, the technical solutions and the methods of the present invention are further described in detail in conjunction with figures for comprehensively understanding the technical solutions and the methods of the present invention.

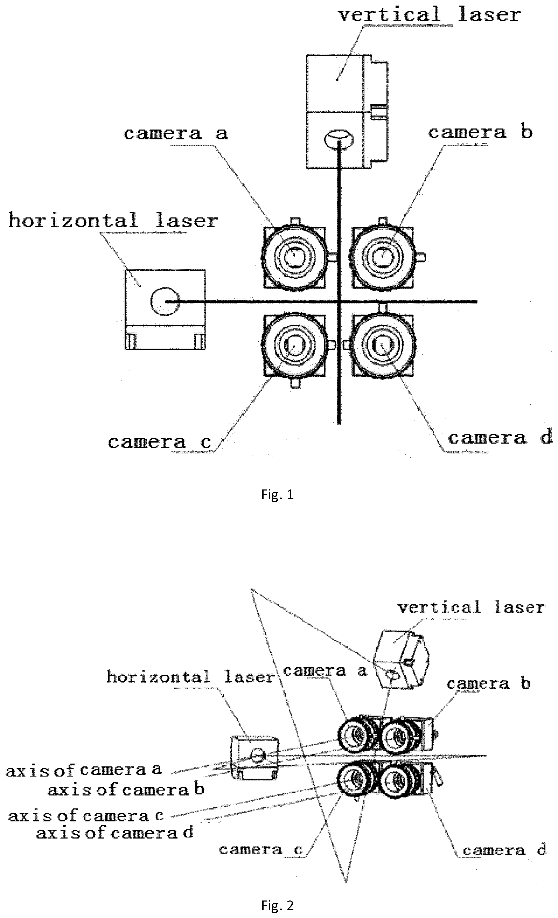

As shown in Fig. 1, Fig. 2, and Fig. 3, a feature-point three-dimensional measuring system of a planar array of a four-camera group comprises at least one four-camera group, the group formed by four digital cameras.

A four-camera group formed by four digital cameras is arranged in a form of a $2\times2$ array.

The four digital cameras comprise a camera a, a camera b, a camera c, and a camera d, wherein the camera a, the camera b, the camera c, and the camera d are arranged on the same plane.

Focal points $O_a$, $O_b$, $O_c$, and $O_d$ on imaging optical axes of the four cameras, the camera a, the camera b, the camera c, and the camera d, are on the same plane and form one rectangular shape, forming a rectangular plane, that is, the camera a, the camera b, the camera c, and the camera d are respectively located at four corners of the rectangular shape (as in Fig. 1, Fig. 2, and Fig. 3); all of imaging optical axis central lines of the four cameras, the camera a, the camera b, the camera c, and the camera d, are perpendicular to the rectangular plane.

The four cameras, the camera a, the camera b, the camera c, and the camera d, are of identical models and have identical lenses; a distance between two cameras, forming the length or width dimensions of a rectangular shape, can be arbitrarily adjusted as long as keeping it rectangular. For the selection of resolutions of the cameras and other parameters, focal lengths of the lenses, and length and width dimensions of the rectangular shape, suitable parameters

EP 3 232 151 B1

should be selected, according to a location and dimensions of the measured object, ensuring that all of the four cameras are capable of, within the view field, taking an image of the measured object, at the same time, being capable of meeting requirements of measurement accuracy to resolutions of the images.

At least one vertical laser and at least one horizontal laser are further comprised. The so-called vertical laser is a laser provided in a vertical direction. The so-called horizontal laser is a laser provided in a horizontal direction. Gas lasers, solid-state lasers, semiconductor lasers, free electron lasers or pulsed lasers can be chosen as the lasers.

The camera a is located on a position horizontal to the camera b. The camera c is located on a position horizontal to the camera d (parallel to the camera a and the camera b). The vertical laser is configured to be located on a perpendicular bisector of a connecting line of $O_a$ and $O_b$. As shown in Fig. 1 and Fig. 2, the vertical laser is located at the top of the camera a and the camera b, with a distance of 1 to 3 times the length of a connecting line of the focal points of the camera a and the camera b.

The camera a is located on a position vertical to the camera c. The camera b is located on a position vertical to the camera d (parallel to the camera a and the camera c). The horizontal laser is configured to be located on a perpendicular bisector of a connecting line of $O_a$ and $O_c$. As shown in Fig. 1 and Fig. 2, the horizontal laser is located at the left of the camera a and the camera c, with a distance of 1 to 3 times the length of the connecting line of the focal points of the camera a and the camera c.

The four-camera group formed by the four digital cameras is formed by four digital cameras where a focal point on an imaging optical axis of a chosen camera and focal points on imaging optical axes of three adjacent cameras form one rectangular shape, forming a rectangular plane, moreover, all of the imaging optical axis central lines of the four cameras are perpendicular to this rectangular plane.

The four-camera group is provided in a form of 2×3, 2×4, 2×5, 3×2, 3×3, 3×4, 3×5 or 4×4 array. In order to be capable of measuring objects at different positions having different external dimensions and meeting requirements of different levels of measurement accuracy, in the vision measuring system, as demanded, the 2x2 array of the four-camera group is in pair arranged into a array of cameras in accordance with a rectangular shape for expanding, so as to enlarge the measured range of view field. The array of the four-camera group is a 2×2 array. If the lateral range of the view field is increased, another pair of cameras can be further arranged in the lateral direction, turning into a 3x2 array. Possible expanded arrays are 2×3, 2×4, 2×5, 3×2, 3×3, 3×4, 3×5, 4×4 and so on.

A prime principle of the arrangement of the measuring camera array is that a focal point on an imaging optical axis of a camera and focal points on imaging optical axes of three adjacent cameras form one rectangular shape, and all of the imaging optical axis central lines of the cameras are perpendicular to the rectangular plane.

Another principle of the arrangement of the measuring camera array is that, for a feature point which needs to be measured, corresponding matching points can be found in all images in the camera array, at least in one four-camera 2×2 array.

A calculating principle of the measuring camera array is that calculation of imaging matching and calculation of three-dimensional coordinates are performed on the basis of the 2x2 array of the four-camera group. If one pair of cameras are adjacent to other two pairs of cameras in the horizontal direction or the vertical direction respectively, this pair of cameras can take part in operations of the 2x2 arrays of the four-camera group with the other two pairs of cameras adjacent to them, respectively.

In the feature-point three-dimensional measuring method of a planar array of a four-camera group, one or more vertical line laser generators (i.e. vertical lasers) or horizontal line laser generators (i.e. horizontal lasers) can be provided, seeing Fig. 1 and Fig. 2. The purpose of the one or more vertical line laser generators or horizontal line laser generators is being capable of quickly and accurately performing matching of the four-camera group image versus the same measured point on the intersecting line of the laser and the viewed object through laser-structured light. (Since the laser light has high illuminance compared with a common light source, it is easy to obtain on the image a graph of the intersecting line with the object, moreover, it is easy to calculate three-dimensional coordinates of the intersecting line according to the optical screenshot principle, without ambiguity. Similar to an indicating line, it facilitates image matching. From another perspective, if the images are directly matched, the algorithm is complex, easily causing matching error and hard to guarantee uniqueness.) But if the line laser generator is not provided, the measurement results will not be affected as long as quick matching of the image feature point can be realized. Sometimes, in order to meet the requirements of measuring speed and accuracy, a plurality of horizontal or vertical laser lines can be arranged. It is recommended to use an arrangement manner of arranging laser lines parallel to each other.

In the four-camera group, the cameras have sensors of a type of 2/3" CMOS, a pixel dimension of 5.5 $\mu$m, a resolution of 1024×2048, and a focal length of lens of 25 millimeter.

In the four-camera group, a distance between two adjacent cameras in a horizontal direction is m, and a distance between two adjacent cameras in a vertical direction is n, wherein a range of the m is 50-100 millimeter, and a preferable range of the m is 60 millimeter; a range of the n is 50-100 millimeter, and a preferable range of the n is 50 millimeter.

A measuring method based on the above mentioned three-dimensional measuring system comprises the following specific steps:

step 1: establishing a measuring system according to a three-dimensional vision measuring method of a planar array of a four-camera group, wherein

a main principle of establishing this measuring system is: there are provided four or more identical cameras, whose optical axes are parallel, and whose focal points are on the same plane and can form one rectangular shape;

for the selection of dimensions of the rectangular shape and parameters of the cameras and the lenses, mainly considering factors are accuracy of the measuring system and a size of a measured object, wherein when high measuring accuracy is required, it is considered to improve the resolutions of the cameras and increase the focal lengths of the lenses, at the same time, it is needed to ensure that the measured object can simultaneously have corresponding imaging points on the four cameras, and if the measured object is out of the imaging range, it also can be considered to increase the measuring cameras in pair, forming an array of the measuring cameras;

step 2: after acquisition of images is completed, performing a matching operation for a feature point of the images of the camera group, wherein

currently, there are a lot of relevant researches and algorithms for the binocular and multi-view image matching algorithm, we can carry out corresponding matching for imaging points of the measured object on the image with reference to the current algorithm. Since we use the multi-camera redundant and specifically structured arrangement method, corresponding matching is performed for the imaging points of the measured object on the images using the binocular and multi-view image matching algorithm; as to the epipolar algorithm in the binocular vision matching algorithm, the epipolar is directly simplified as a straight line parallel to an X axis and a Y axis, that is to say, all corresponding projection points of the measured object on respective imaging planes are on the straight line parallel to the X axis and the Y axis; full matching is carried out for all measured points of the measured object, by directly translating, superimposing, and comparing, point by point, the pixel points of measured images of each pair in X-axis and Y-axis directions. This method can greatly simplify the complex algorithm of binocular matching.

In the binocular stereoscopic vision measurement, stereoscopic matching means that one of the imaging points is known and a corresponding point of this imaging point is found on another image. Epipolar geometric constraint is a common matching constraint technology. We connect three points, the measured point and the imaging points on the corresponding images, to form one plane. Intersecting lines of this plane with the two images in the imaging space are called as epipolar by us. A constraint condition of epipolar is that the matching point(s) must be located on the epipolar.

As to the epipolar algorithm, since in the three-dimensional vision measuring method of a planar array of a four-camera group, the optical axes of the cameras are parallel, and the focal points form a rectangular shape on the same plane, the epipolar is directly simplified as a straight line parallel to the X axis or the Y axis, that is to say, all corresponding projection points of the measured object on respective imaging planes are on the straight line parallel to the X axis or the Y axis; thus, when performing the matching operation, full matching can be carried out for all measured points of the measured object, by directly translating, superimposing, and comparing, point by point, the pixel points of measured images of each pair in X-axis and Y-axis directions;

in the matching operation, it is required to make the matching operations on the images of the four-camera group, finding out all feature points whose spatial locations need to be calculated, and if a camera array having more than four cameras is used for measurement, different matching operations should be performed in different four-camera groups respectively;

step 3: according to matched feature point image coordinates, calculating coordinates of a spatial location of the feature point, wherein

the matched feature point image coordinates are put into coordinate expressions of any feature point $P_N$ in the space of the measured object, to calculate coordinates of spatial locations of respective feature points;

according to calculation formulas of the spatial location of the feature point, a width dimension of the measured object can be calculated through the matched feature points between two pairs of horizontal cameras, a height dimension of the measured object can be calculated through the matched feature points between two pairs of vertical cameras, and a length dimension of the measured object can be calculated through the matched feature points between two pairs of horizontal cameras and two pairs of vertical cameras. All of the dimensions above, having a redundant feature, can be compared and analyzed on the redundant data, improving the measuring accuracy and precision rate;

step 4: according to the obtained coordinates of the spatial locations of respective feature points, calculating other three-dimensional dimensions of the measured object which need to be specially measured to form three-dimensional point cloud data and establish a three-dimensional point cloud graph for performing three-dimensional stereoscopic reproduction.

In the step 1, parameters of the cameras and the lenses, and the length and width dimensions of the rectangular shape are selected based on:

when a measuring distance is unchanged, the larger a volume of the measured object, the shorter the focal lengths required by the lenses; when the measuring distance is increased, a measurable range is also correspondingly increased;

a measuring resolution is improved in a way of: improving the resolutions of the cameras, decreasing the measuring distance, and in a condition that the measuring distance is unchanged, decreasing values of the focal lengths, and increasing dimensions of an array of the focal points of the optical axes of the four-camera group.

In the step 3, according to the matched feature point image coordinates, formulas of calculating coordinates of the spatial location of the feature point are:

with a central point O of a rectangular plane of the focal points $O_a$, $O_b$, $O_c$, and $O_d$ of the group of four cameras, the camera a, the camera b, the camera c, and the camera d, serving as an origin, setting a triangular coordinate system of the space of the measured object, wherein X is a horizontal direction, Y is a vertical direction, and Z is a length or depth direction;

coordinates of a spatial location of the same point, point $P_1$, of the measured object are $P_1$ ($P_{1x}$, $P_{1y}$, $P_{1z}$), and corresponding imaging points of the spatial three-dimensional coordinates of the point $P_1$ in the group of four cameras, the camera a, the camera b, the camera c, and the camera d are $P_{1a}$ ($P_{1ax}$, $P_{1ay}$), $P_{1b}$ ($P_{1bx}$, $P_{1by}$), $P_{1c}$ ($P_{1cx}$, $P_{1cy}$), and $P_{1d}$ ($P_{1dx}$, $P_{1dy}$), relational expressions of location coordinates are as follows:

a horizontal operation formula of the camera a and the camera b:

$$P_{1x} = \frac{m\left(P_{1ax} + P_{1bx}\right)}{2\left(P_{1bx} - P_{1ax}\right)},$$

a horizontal operation formula of the camera c and the camera d:

$$P_{1x} = \frac{m\left(P_{1cx} + P_{1dx}\right)}{2\left(P_{1dx} - P_{1cx}\right)},$$

a vertical operation formula of the camera a and the camera c:

$$P_{1y} = \frac{n\left(P_{1cy} + P_{1ay}\right)}{2\left(P_{1cy} - P_{1ay}\right)},$$

a vertical operation formula of the camera b and the camera d:

$$P_{1y} = \frac{n\left(P_{1by} + P_{1dy}\right)}{2\left(P_{1dy} - P_{1by}\right)},$$

a depth operation formula of the camera a and the camera b:

$$P_{1z} = \frac{mf}{P_{1ax} - P_{1bx}},$$

a depth operation formula of the camera c and the camera d:

$$P_{1z} = \frac{mf}{P_{1cx} - P_{1dx}},$$

a depth operation formula of the camera a and the camera c:

$$P_{1z} = \frac{nf}{P_{1ay} - P_{1cy}},$$

and
a depth operation formula of the camera b and the camera d:

$$P_{1z} = \frac{nf}{P_{1by} - P_{1dy}},$$

where m is an $O_aO_b$ length and n is an $O_aO_c$ length of the rectangular plane, and f is the focal length of the four cameras.

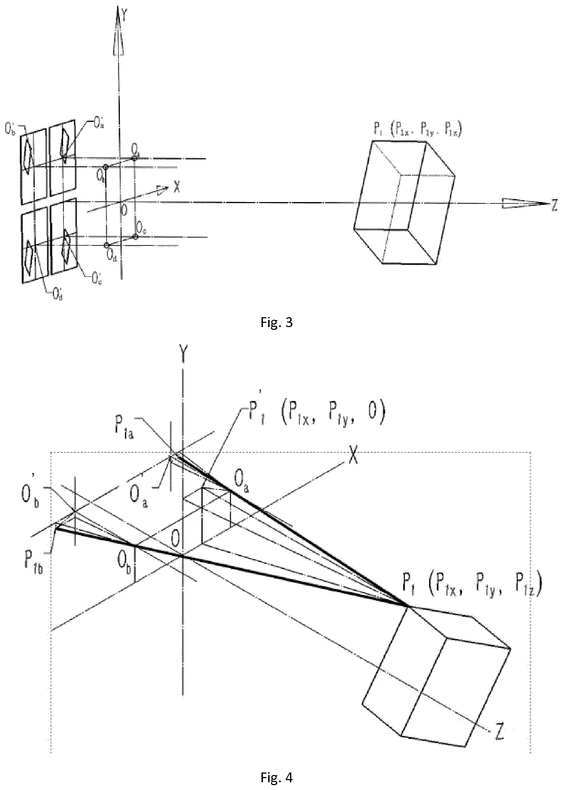

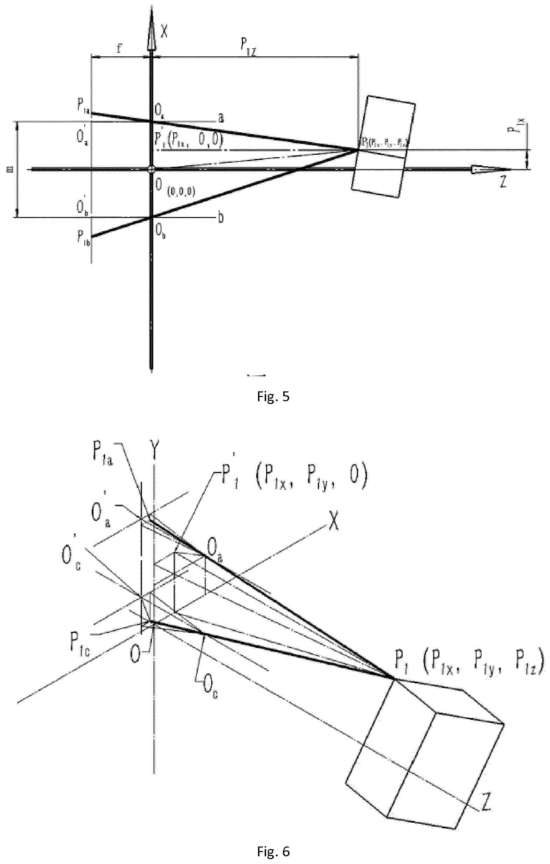

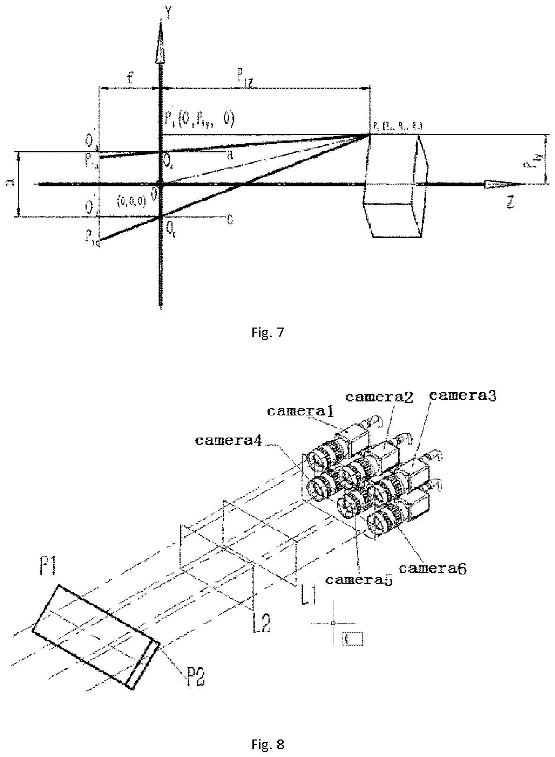

See Fig. 3, Fig. 4, Fig. 5, Fig. 6, and Fig. 7 for the three-dimensional stereoscopic vision measuring principle of the present invention, wherein Fig. 4 and Fig. 5 are schematic views of calculating horizontal dimensions of the camera a and the camera b, and Fig. 6 and Fig. 7 are schematic views of calculating vertical dimensions of the camera a and the camera c.

We take Fig. 3, Fig. 4, Fig. 5, Fig. 6, and Fig. 7 as examples to describe the measuring principle.

In Fig. 3, let the focal points of the group of four cameras, a, b, c, and d, be $O_a$, $O_b$, $O_c$, and $O_d$, the focal points $O_a$, $O_b$, $O_c$, and $O_d$ are on the same plane and form one rectangular plane. Let the $O_aO_b$ length of the rectangular plane be m, and the $O_aO_c$ length be n. The optical axes of the four-camera group are parallel to each other and perpendicular to this rectangular plane. The four cameras a, b, c, and d use identical Charge-coupled Device (CCD) imaging, and also have identical lenses with a focal length set to be f. Let centers of imaging planes of the CCD imaging of the four-camera group of a, b, c, and d be $O_a'$, $O_b'$, $O_c'$, and $O_d'$.

Let one feature point of the measured object be $P_1$. We take the central point O of the rectangular plane of $O_a$, $O_b$, $O_c$, and $O_d$ as an origin, and set the triangular coordinate system of the space of the measured object, wherein X is a horizontal direction, Y is a vertical direction, and Z is a length or depth direction, and then, let coordinates of the spatial location of the point $P_1$ be $P_1$ ($F_{1x}$, $P_{1y}$, $P_{1z}$).

As in Fig. 4, only positional relationships of spatial imaging of the camera a and the camera b are described. Let imaging points of the point $P_1$ on the imaging planes of the camera a and the camera b be $P_{1a}$ and $P_{1b}$, a projection point of the point $P_1$ on a coordinate XY axis plane be $P_1'$ with coordinates thereof being $P_1'$ ($P_{1x}$, $P_{1y}$, 0). According to the imaging principle, a connecting line of the point $P_1$ and $P_{1a}$ passes through the point $O_a$, and a connecting line of the point $P_1$ and $P_{1b}$ passes through the point $O_b$. Taking $O_a'$ and $O_b'$ as centers, coordinate systems of imaging planes of the camera a and the camera b having directions consistent with those of the coordinate axes of the spatial coordinate system OXYZ of the object are set respectively, and then, coordinates of $P_{1a}$ are ($P_{1ax}$, $P_{1ay}$), and coordinates of $P_{1b}$ are $P_{1b}$ ($P_{1bx}$, $P_{1by}$).

As in Fig. 5, geometrical relationships of projections of the three points $P_{1a}$, $P_{1b}$, and $P_1$ in an XZ coordinate plane are described. According to the triangle similarity principle, we obtain:

$$\frac{P_{1z}}{f} = \frac{\frac{m}{2} - P_{1x}}{P_{1ax}} \qquad ①$$

$$\frac{P_{1z}}{f} = \frac{\frac{m}{2} + P_{1x}}{-P_{1bx}} \qquad ②$$

According to ① and ②,

$$\frac{\frac{m}{2}-P_{1x}}{P_{1ax}} = \frac{\frac{m}{2}+P_{1x}}{-P_{1bx}}$$

$$-P_{1bx}\left(\frac{m}{2}-P_{1x}\right) = \left(\frac{m}{2}+P_{1x}\right)P_{1ax}$$

$$-\frac{m}{2}P_{1bx} + P_{1bx}P_{1x} = \frac{m}{2}P_{1ax} + P_{1ax}\times P_{1x}$$

$$P_{1x} = \frac{m\left(P_{1ax}+P_{1bx}\right)}{2\left(P_{1bx}-P_{1ax}\right)} \qquad ③$$

According to ① and ③,

$$P_{1ax}\frac{P_{1z}}{f} = \frac{m}{2} - \frac{m\left(P_{1ax}+P_{1bx}\right)}{2\left(P_{1bx}-P_{1ax}\right)}$$

$$2P_{1ax}P_{1z}(P_{1bx} - P_{1ax}) = mf(P_{1bx}-P_{1ax} - P_{1ax}-P_{1bx})$$

$$P_{1z} = \frac{-2P_{1ax}mf}{2(P_{1bx}-P_{1ax})P_{1ax}} = \frac{mf}{P_{1ax}-P_{1bx}} \qquad ④$$

As in Fig. 6, only positional relationships of spatial imaging of the camera a and the camera c are described. Let an imaging point of the point $P_1$ on the imaging plane of the camera c be $P_{1c}$, a projection point of the point $P_1$ on the coordinate XY axis plane be $P_1'$ and its coordinates be $P_1'$ ($P_{1x}$, $P_{1y}$, 0). According to the imaging principle, a connecting line of the point $P_1$ and $P_{1c}$ passes through the point $O_c$. Taking $O_c'$ as a center, an coordinate system of the imaging plane of the camera c having directions consistent with those of the coordinate axes of the spatial coordinate system OXYZ of the object is set, wherein coordinates of $P_{1c}$ are $P_{1c}$ ($P_{1cx}$, $P_{1cy}$).

As in Fig. 7, geometrical relationships of projections of the three points $P_{1a}$, $P_{1c}$, and $P_1$ in a YZ coordinate plane are described. According to the triangle similarity principle, we obtain:

$$\frac{P_{1z}}{f} = \frac{P_{1y}-\frac{n}{2}}{-P_{1ay}} \qquad ⑤$$

$$\frac{P_{1z}}{f} = \frac{\frac{n}{2}+P_{1y}}{-P_{1cy}} \qquad ⑥$$

According to ⑤ and ⑥,

$$\frac{P_{1y}-\frac{n}{2}}{P_{1ay}} = \frac{\frac{n}{2}+P_{1y}}{P_{1cy}}$$

$$P_{1cy}\left(P_{1y}-\frac{n}{2}\right) = \left(\frac{n}{2}+P_{1y}\right)P_{1ay}$$

$$P_{1cy}P_{1y} - \frac{n}{2}P_{1cy} = \frac{n}{2}P_{1ay} + P_{1ay}\times P_{1y}$$

$$P_{1y} = \frac{n\left(P_{1cy}+P_{1ay}\right)}{2\left(P_{1cy}-P_{1ay}\right)} \qquad ⑦$$

According to ⑤ and ⑦,

$$P_{1ay}\frac{P_{1z}}{f} = \frac{n}{2} - \frac{n(P_{1cy}+P_{1ay})}{2(P_{1cy}-P_{1ay})}$$

$$2P_{1ay}P_{1z}(P_{1cy} - P_{1ay}) = nf(P_{1cy} - P_{1ay} - P_{1cy}-P_{1ay})$$

$$P_{1z} = \frac{-2P_{1ay}nf}{2P_{1ay}(P_{1cy}-P_{1ay})} = \frac{nf}{(P_{1ay}-P_{1cy})} \qquad ⑧$$

According to formulas ③, ④, ⑦, and ⑧, through paired operations of the cameras a and b and the cameras a and c respectively, we obtain expression calculation formulas of the coordinates $P_{1x}$, $P_{1y}$, and $P_{1z}$ of a spatial location of the point $P_1$ in regard to the coordinates of the projection points $P_{1a}$ and $P_{1b}$, and $P_{1c}$ of the point $P_1$ on the cameras a, b, and c.

When the camera group measuring the horizontal dimensions, the cameras a and b or the cameras c and d can be used for the paired operations, and the operation principles and methods of the cameras c and d are identical with those of the cameras a and b. When the camera group measuring the vertical dimensions, the cameras a and c or the cameras b and d can be used for the paired operations, and the operation principles and methods of the cameras b and d are identical with those of the cameras a and c.

The measuring formulas are summarized as follows:

taking the central point O of the rectangular plane of the focal points $O_a$, $O_b$, $O_c$, and $O_d$ of the group of four cameras, a, b, c, and d, as an origin, the triangular coordinate system of the space of the measured object is set, wherein X is the horizontal direction, Y is the vertical direction, and Z is the length or depth direction. The coordinates of the spatial location of the same point of the measured object, point $P_1$, are $P_1$ ($P_{1x}$, $P_{1y}$, $P_{1z}$). Relationship expressions of the spatial three-dimensional coordinates of the point $P_1$ in regard to the location coordinates of the corresponding imaging points $P_{1a}$, $P_{1b}$, $P_{1c}$, and $P_{1d}$ in the group of four cameras, a, b, c, and d, are as follows (where m is the $O_aO_b$ length and n is the $O_aO_c$ length of the rectangular plane, and f is the focal length of the four cameras):

the horizontal operation formula of the cameras a and b:

$$P_{1x} = \frac{m(P_{1ax} + P_{1bx})}{2(P_{1bx} - P_{1ax})},$$

the horizontal operation formula of the cameras c and d:

$$P_{1x} = \frac{m(P_{1cx} + P_{1dx})}{2(P_{1dx} - P_{1cx})},$$

the vertical operation formula of the cameras a and c: $P_{1y} = \frac{n(P_{1cy} + P_{1ay})}{2(P_{1cy} - P_{1ay})},$

the vertical operation formula of the cameras b and d: $P_{1y} = \frac{n(P_{1by} + P_{1dy})}{2(P_{1dy} - P_{1by})},$

the depth operation formula of the cameras a and b: $P_{1z} = \frac{mf}{P_{1ax} - P_{1bx}},$

the depth operation formula of the cameras c and d: $P_{1z} = \frac{mf}{P_{1cx} - P_{1dx}},$

the depth operation formula of the cameras a and c: $P_{1z} = \frac{nf}{P_{1ay} - P_{1cy}}$ and

the depth operation formula of the cameras b and d: $P_{1z} = \frac{nf}{P_{1by} - P_{1dy}}.$

In the step 3, a general expression for calculating coordinates of a feature point, the spatial location coordinates of $P_N$, is as follows:

let the focal points of the four cameras, the camera a, the camera b, the camera c, and the camera d, be $O_a$, $O_b$, $O_c$, and $O_d$, wherein the focal points $O_a$, $O_b$, $O_c$, and $O_d$ are on the same plane and form one rectangular plane, wherein let the $O_aO_b$ length of the rectangular plane be m and the $O_aO_c$ length be n, and the optical axes of the four cameras are parallel to each other and perpendicular to this rectangular plane; let the group of four cameras, the camera a, the camera b, the camera c, and the camera d, use identical CCD imaging, and also identical lenses with a focal length set to be f;

set a rectangular coordinate system of the space of the measured object, taking the central point O of the rectangular plane of $O_a$, $O_b$, $O_c$, and $O_d$ as the origin, wherein X is the horizontal direction parallel to an edge $O_aO_b$ of the rectangular shape, Y is the vertical direction parallel to an edge $O_aO_c$ of the rectangular shape, and Z is the length or depth direction and points towards the measured object;

let any feature point in the measured object be $P_N$, and coordinates of projection points of $P_N$ on the imaging planes of the group of four cameras, the camera a, the camera b, the camera c, and the camera d, be $P_{Na}$ ($P_{Nax}$, $P_{Nay}$), $P_{Nb}$ ($P_{Nbx}$, $P_{Nby}$), $P_{Nc}$ ($P_{Ncx}$, $P_{Ncy}$), and $P_{Nd}$ ($P_{Ndx}$, $P_{Ndy}$), and then, let coordinates of a spatial location of the point $P_N$ be $P_N$ ($P_{Nx}$, $P_{Ny}$, $P_{Nz}$).

Generally, in the feature-point three-dimensional measuring method of a planar array of a four-camera group, an expression of coordinates of any feature point $P_N$ in the space of the measured object are as follows:

$$P_N (P_{Nx}, P_{Ny}, P_{Nz}), \text{ where } N=1,2,3,4,5,\ldots\ldots$$

$$= \begin{cases} P_{Nx} &= \dfrac{m\left(P_{Nax}+P_{Nbx}\right)}{2\left(P_{Nbx}-P_{Nax}\right)} = \dfrac{m\left(P_{Ncx}+P_{Ndx}\right)}{2\left(P_{Ndx}-P_{Ncx}\right)} \\[3mm] P_{Ny} &= \dfrac{n\left(P_{Ncy}+P_{Nay}\right)}{2\left(P_{Ncy}-P_{Nay}\right)} = \dfrac{n\left(P_{Nby}+P_{Ndy}\right)}{2\left(P_{Ndy}-P_{Nby}\right)} \\[3mm] P_{Nz} = \dfrac{mf}{P_{Nax}-P_{Nbx}} &= \dfrac{mf}{P_{Ncx}-P_{Ndx}} = \dfrac{nf}{P_{Nay}-P_{Ncy}} = \dfrac{nf}{P_{Nby}-P_{Ndy}} \end{cases}.$$

According to the above formula, we can make the following conclusions:

1. The three-dimensional vision measuring method of a planar array of a four-camera group can calculate the three-dimensional stereoscopic coordinates of the same point of the measured object according to changes of positions of the imaging points of the same point of the measured object in different cameras, wherein horizontal dimensions are calculated by two pairs of horizontally arranged cameras, vertical dimensions are calculated by two pairs of vertically arranged cameras, and depth dimensions can be calculated by both two pairs of horizontal cameras and two pairs of vertical cameras.

2. The three-dimensional vision measuring method of a planar array of a four-camera group can calculate the three-dimensional stereoscopic data of the feature point of the measured object just through simple algebraic calculations between the feature point image coordinates. The calculation accuracy of the coordinates of the same point of the measured object is only related to the camera accuracy and resolution, mutual positional accuracy and distance of the cameras. Compared with the existing optical screenshot algorithm and other algorithms which need calibration in advance, it is not needed to use complex calibration formulas, greatly simplifying the calculation of the spatial dimensions, at the same time, preventing errors of a calibrator and a calibration process from being put into measurement results.

3. The three-dimensional vision measuring method of a planar array of a four-camera group belongs to a multi-camera redundant and specifically structured arrangement method. As to algorithm of an epipolar in the binocular vision matching algorithm, the epipolar is directly simplified as a straight line parallel to an X axis and a Y axis, that is to say, all corresponding projection points of the measured object on respective imaging planes are on the straight line parallel to the X axis and the Y axis. We can make full matching for all measured points of the measured object, by directly translating, superimposing, and comparing, point by point, the pixel points of measured images of each pair in X-axis and Y-axis directions. This method can greatly simplify the complex algorithm of binocular matching.

Detailed descriptions are made below with one example.

As shown in Fig. 8, Fig. 9, and Fig. 10, we use a camera 1, a camera 2, a camera 3, a camera 4, a camera 5, and camera 6 to form a three-dimensional measuring system of one 3x2 camera array; the camera 1, the camera 2, the camera 3, the camera 4, the camera 5, and the camera 6 are respectively called as 1, 2, 3, 4, 5, and 6 for short.

The six cameras we use have a sensor of the type of 2/3"CMOS, a pixel size of 5.5 $\mu$m, a resolution of 1024×2048, and a focal length of lens of 25 mm. Three cameras are arranged in the horizontal direction, and two cameras are arranged in the vertical direction, forming a three-dimensional measuring system of a 3×2 camera array, wherein a distance between cameras in the horizontal direction is m=60 mm, and a distance between cameras in the vertical direction is n=50 mm.

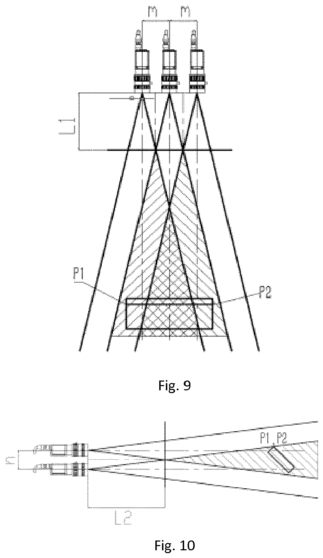

Let a measured object be a cuboid, and two measured points at the top of the cuboid be $P_1$ and $P_2$. It is seen from Fig. 9 (a top view) that the measured object cannot be placed within a view field smaller than L1, otherwise it cannot be ensured that the measured object is imaged within an intersecting area of view fields of at least two cameras in the horizontal direction. It is seen from Fig. 10 (a side view) that the measured object cannot be placed within a view field smaller than L2, otherwise it cannot be ensured that the measured object is imaged within an intersecting area of view fields of two cameras in the vertical direction. L1 and L2 can be called as the nearest measuring distances. It is seen from Fig. 8 that L2>L1. We take the area with a measuring distance smaller than L2 as a blind area of this measuring system. Except the blind area, areas indicated by oblique lines in the figure are just areas where measurement can be realized.

It is seen from the figures that the measured point $P_1$ is located in a measuring area of 1245 four-camera group, and $P_2$ is located in a measuring area of 2356 four-camera group. In this measuring system, we can firstly use the 1245 four-camera group for performing operations to calculate respective measured points of the measured object, including the point $P_1$, which can be imaged by the 1245 four-camera group, and then, use the 2356 four-camera group for performing operations to calculate respective measured points of the measured object, including the point $P_2$, which can be imaged by the 2356 four-camera group, finally, the results of the two calculations are comprehensively analyzed for preferably choosing data which can be measured in both groups, completing the three-dimensional measurement of all points.

As to parts of the three-dimensional stereoscopic surfaces of the measured object which cannot be imaged in the four-camera group, we can solve the problem by means of measuring several times or adding other measuring systems.

**Claims**

1. A feature-point three-dimensional measuring system of a planar array of identical digital cameras arranged in two or more pairs such as to form one or more four-camera group of four cameras, wherein

each four-camera group is arranged in a form of a 2x2 array,
in the case that one pair of cameras is adjacent to two other pairs of cameras in the horizontal or vertical direction, this pair of cameras is part of two four-camera groups formed respectively by this pair of camera and each of the two other adjacent pairs of cameras;
each four-camera group comprises a camera a, a camera b, a camera c, and a camera d, wherein
the camera a, the camera b, the camera c, and the camera d are arranged on a same plane;
focal points $O_a$, $O_b$, $O_c$, and $O_d$ on imaging optical axes of the four cameras, the camera a, the camera b, the camera c, and the camera d, are on a same plane and form one rectangular shape, forming a rectangular plane;
all of imaging optical axis central lines of the four cameras, the camera a, the camera b, the camera c, and the camera d, are perpendicular to the rectangular plane;
the four cameras, the camera a, the camera b, the camera c, and the camera d, are of identical models and have identical lenses;
the camera a is located on a position horizontal to the camera b, and the camera c is located on a position horizontal to the camera d;
the camera a is located on a position vertical to the camera c and the camera b is located on a position vertical to the camera d;
the four cameras have overlapping field of views such that the measured object can simultaneously have corresponding imaging points on the four cameras;
wherein the feature-point three-dimensional measuring system further comprises at least one vertical laser and at least one horizontal laser, wherein the vertical laser is configured to be located on a perpendicular bisector of a connecting line of $O_a$ and $O_b$, and the horizontal laser is configured to be located on a perpendicular bisector of a connecting line of $O_a$ and $O_c$.

2. The feature-point three-dimensional measuring system of a planar array of a four-camera group according to Claim 1, **characterized in that** the four or more cameras are provided in a form of $2\times3$, $2\times4$, $2\times5$, $3\times2$, $3\times3$, $3\times4$, $3\times5$ or $4\times4$ array, to form at least one four-camera group.

3. The feature-point three-dimensional measuring system of a planar array of a four-camera group according to any one of Claims 1-2, **characterized in that** in the four-camera group, the cameras have sensors of a type of 2/3" CMOS, a pixel dimension of 5.5 $\mu$m, a resolution of $1024\times2048$, and a focal length of lens of 25 millimeter.

4. The feature-point three-dimensional measuring system of a planar array of a four-camera group according to any one of Claims 1-2, **characterized in that** in the four-camera group, a distance between two adjacent cameras in a horizontal direction is m, and a distance between two adjacent cameras in a vertical direction is n, wherein a range of the m is 50-100 millimeter, and a range of the n is 50-100 millimeter.

5. A measuring method using the three-dimensional measuring system according to Claim 1, **characterized in that** it comprises specific steps as follows:

   step 1: establishing a measuring system according to claim 1; wherein
   dimensions of the rectangular shape and parameters of the cameras and the lenses are selected based on accuracy of the measuring system and a size of a measured object, so that when high measuring accuracy is required, the resolution of the cameras is improved and the focal length of the lenses is increased; at the same time, the measured object is ensured to be able to simultaneously have corresponding imaging points on the four cameras, wherein if the measured object is out of the imaging range, the measuring cameras are increased in pair, to form multiple four-camera groups, and each pair of cameras take part in operations of other two pairs of cameras adjacent thereto, respectively;
   step 2: after acquisition of images is completed, performing a matching operation for feature points of the images of the camera group, wherein
   when performing the matching operation, full matching is carried out for the feature points of the measured object by translating, superimposing, and comparing, point by point, pixel points of measured images of two pairs of horizontal cameras and two pairs of vertical cameras in a horizontal direction and in a vertical direction; in the matching operation, it is required to make the matching operation on the images of the four-camera group, finding out all feature points whose spatial locations need to be calculated, and if a camera array having more than four cameras is used for measurement, different matching operations need to be performed in different four-camera groups respectively;
   step 3: according to matched feature point image coordinates, calculating coordinates of a spatial location of the feature point, wherein
   the matched feature point image coordinates are put into coordinate expressions of any feature point $P_N$ in a space of the measured object, to calculate coordinates of spatial locations of respective feature points;
   according to calculation formulas of the spatial location of the feature point, a width dimension of the measured object is calculated through matched feature points between two pairs of horizontal cameras, a height dimension of the measured object is calculated through matched feature points between two pairs of vertical cameras, and a length dimension of the measured object is calculated through matched feature points between two pairs of horizontal cameras and two pairs of vertical cameras, wherein all of the dimensions above, having a redundant feature, are compared and analyzed on redundant data, improving measuring accuracy and precision rate;
   step 4: according to obtained coordinates of the spatial locations of respective feature points, calculating other three-dimensional dimensions of the measured object which need to be specially measured to form three-dimensional point cloud data and establish a three-dimensional point cloud graph for performing three-dimensional stereoscopic reproduction
   wherein the measuring system further comprises at least one vertical laser and at least one horizontal laser, wherein the vertical laser is configured to be located on a perpendicular bisector of a connecting line of $O_a$ and $O_b$, and the horizontal laser is configured to be located on a perpendicular bisector of a connecting line of $O_a$ and $O_c$.

6. The measuring method according to Claim 5, **characterized in that** in the step 1, parameters of the cameras and the lenses, and the length and width dimensions of the rectangular shape are selected in such a way that

when a measuring distance is unchanged, the larger a volume of the measured object, the shorter the focal lengths required by the lenses; when the measuring distance is increased, a measurable range is also correspondingly increased,

wherein a measuring resolution is improved in a way of: improving the resolutions of the cameras, decreasing the measuring distance, and in a condition that the measuring distance is unchanged, decreasing values of the focal lengths, and increasing dimensions of an array of centers of the optical axes of the four-camera group.

7. The measuring method according to Claim 5, **characterized in that** in the step 3, according to the matched feature point image coordinates, formulas of calculating coordinates of the spatial location of the feature point are:

with a central point O of a rectangular plane of the focal points $O_a$, $O_b$, $O_c$, and $O_d$ of a group of four cameras, the camera a, the camera b, the camera c, and the camera d, serving as an origin, setting a triangular coordinate system of the space of the measured object, wherein X is a horizontal direction, Y is a vertical direction, and Z is a length or depth direction;

coordinates of a spatial location of a same point, point $P_1$, of the measured object are $P_1$ ($P_{1x}$, $P_{1y}$, $P_{1z}$), and corresponding imaging points of the spatial three-dimensional coordinates of the point $P_1$ in the group of four cameras, the camera a, the camera b, the camera c, and the camera d are $P_{1a}$ ($P_{1ax}$, $P_{1ay}$), $P_{1b}$ ($P_{1bx}$, $P_{1by}$), $P_{1c}$ ($P_{1cx}$, $P_{1cy}$), and $P_{1d}$ ($P_{1dx}$, $P_{1dy}$), relational expressions of location coordinates are as follows:

a horizontal operation formula of the camera a and the camera b:

$$P_{1x} = \frac{m\,(\,P_{1ax} + P_{1bx}\,)}{2\,(\,P_{1bx} - P_{1ax}\,)},$$

a horizontal operation formula of the camera c and the camera d:

$$P_{1x} = \frac{m\,(\,P_{1cx} + P_{1dx}\,)}{2\,(\,P_{1dx} - P_{1cx}\,)},$$

a vertical operation formula of the camera a and the camera c:

$$P_{1y} = \frac{n\,\left(\,P_{1cy} + P_{1ay}\,\right)}{2\,(\,P_{1cy} - P_{1ay}\,)},$$

a vertical operation formula of the camera b and the camera d:

$$P_{1y} = \frac{n\,\left(\,P_{1by} + P_{1dy}\,\right)}{2\,(\,P_{1dy} - P_{1by}\,)},$$

a depth operation formula of the camera a and the camera b:

$$P_{1z} = \frac{mf}{P_{1ax} - P_{1bx}},$$

a depth operation formula of the camera c and the camera d:

$$P_{1z} = \frac{mf}{P_{1cx} - P_{1dx}},$$

a depth operation formula of the camera a and the camera c:

$$P_{1z} = \frac{nf}{P_{1ay} - P_{1cy}},$$

a depth operation formula of the camera b and the camera d:

$$P_{1z} = \frac{nf}{P_{1by} - P_{1dy}},$$

where m is an $O_aO_b$ length and n is an $O_aO_c$ length of the rectangular plane, and f is the focal length of the four cameras.

8. The measuring method according to Claim 5, **characterized in that** in the step 3, a general expression for calculating coordinates of a feature point, the spatial location coordinates of $P_N$, is:

$$P_N (P_{Nx}, P_{Ny}, P_{Nz}), \text{ where N=1,2,3,4,5,......}$$

$$= \begin{cases} P_{Nx} = \dfrac{m\left(P_{Nax}+P_{Nbx}\right)}{2\left(P_{Nbx}-P_{Nax}\right)} = \dfrac{m\left(P_{Ncx}+P_{Ndx}\right)}{2\left(P_{Ndx}-P_{Ncx}\right)} \\[2ex] P_{Ny} = \dfrac{n\left(P_{Ncy}+P_{Nay}\right)}{2\left(P_{Ncy}-P_{Nay}\right)} = \dfrac{n\left(P_{Nby}+P_{Ndy}\right)}{2\left(P_{Ndy}-P_{Nby}\right)} \\[2ex] P_{Nz} = \dfrac{mf}{P_{Nax}-P_{Nbx}} = \dfrac{mf}{P_{Ncx}-P_{Ndx}} = \dfrac{nf}{P_{Nay}-P_{Ncy}} = \dfrac{nf}{P_{Nby}-P_{Ndy}} \end{cases},$$

wherein

let the focal points of the four cameras, the camera a, the camera b, the camera c, and the camera d, be $O_a$, $O_b$, $O_c$, and $O_d$, wherein the focal points $O_a$, $O_b$, $O_c$, and $O_d$ are on the same plane and form one rectangular plane, wherein let the $O_aO_b$ length of the rectangular plane be m and the $O_aO_c$ length be n, and the optical axes of the four cameras are parallel to each other and perpendicular to the rectangular plane; the group of four cameras, the camera a, the camera b, the camera c, and the camera d, use identical CCD for imaging, and also identical lenses, with the focal length of the four cameras set to be f;

setting a rectangular coordinate system of the space of the measured object, taking the central point O of the rectangular plane of $O_a$, $O_b$, $O_c$, and $O_d$ as the origin, wherein X is a horizontal direction parallel to an edge $O_aO_b$ of the rectangular shape, Y is a vertical direction parallel to an edge $O_aO_c$ of the rectangular shape, and Z is a length or depth direction and points towards the measured object;

let any feature point in the measured object be $P_N$, and coordinates of projection points of $P_N$ on imaging planes of the group of four cameras, the camera a, the camera b, the camera c, and the camera d, be $P_{Na}$ $(P_{Nax}, P_{Nay})$, $P_{Nb}$ $(P_{Nbx}, P_{Nby})$, $P_{Nc}$ $(P_{Ncx}, P_{Ncy})$, and $P_{Nd}$ $(P_{Ndx}, P_{Ndy})$, and then, let coordinates of a spatial location of the point $P_N$ be $P_N$ $(P_{Nx}, P_{Ny}, P_{Nz})$.

## Patentansprüche

1. Dreidimensionales Merkmalspunkt-Messsystem einer planaren Anordnung von identischen Digitalkameras, die in zwei oder mehr Paaren angeordnet sind, wie zum Beispiel um eine oder mehr Vier-Kamera-Gruppen von vier Kameras zu bilden, wobei

jede Vier-Kamera-Gruppe in einer Form einer 2x2-Anordnung angeordnet ist,

in dem Fall, dass ein Paar von Kameras zwei anderen Paaren von Kameras in der horizontalen oder vertikalen Richtung benachbart ist, ist dieses Paar von Kameras Teil von zwei Vier-Kamera-Gruppen, die durch dieses Paar von Kameras und jede der zwei anderen benachbarten Paare von Kameras gebildet werden;

jede Vier-Kamera-Gruppe umfasst eine Kamera a, eine Kamera b, eine Kamera c und eine Kamera d, wobei die Kamera a, die Kamera b, die Kamera c und die Kamera d in derselben Ebene angeordnet sind;

die Brennpunkte $O_a$, $O_b$, $O_c$ und $O_d$ auf den Bilderzeugungs-Optikachsen der vier Kameras, die Kamera a, die Kamera b, die Kamera c und die Kamera d sind in derselben Ebene und bilden eine Rechteckform, die eine Rechteckebene bildet;

alle Bilderzeugungs-Optikachsen-Mittellinien der vier Kameras, der Kamera a, der Kamera b, der Kamera c und der Kamera d sind senkrecht zur Rechteckebene;

die vier Kameras, die Kamera a, die Kamera b, die Kamera c und die Kamera d sind identische Modelle und haben identische Linsen;

die Kamera a befindet sich auf einer Position horizontal zur Kamera b, und die Kamera c befindet sich auf einer Position horizontal zur Kamera d;

die Kamera a befindet sich auf einer Position vertikal zur Kamera c, und die Kamera b befindet sich auf einer Position vertikal zur Kamera d;

die vier Kameras haben überlappende Sichtfelder, derart dass das gemessene Objekt gleichzeitig entsprechende Bildgebungspunkte auf den vier Kameras haben kann;

wobei das dreidimensionale Merkmalspunkt-Messsystem ferner mindestens einen vertikalen Laser und mindestens einen horizontalen Laser umfasst, wobei der vertikale Laser dafür ausgelegt ist, sich auf einer senkrechten Winkelhalbierenden einer Verbindungslinie von $O_a$ und $O_b$ zu befinden, und der horizontale Laser ist dafür ausgelegt, sich auf einer senkrechten Winkelhalbierenden einer Verbindungslinie von $O_a$ und $O_c$ zu befinden.

2. Dreidimensionales Merkmalspunkt-Messsystem einer planaren Anordnung einer Vier-Kamera-Gruppe nach Anspruch 1, **dadurch gekennzeichnet, dass** die vier oder mehr Kameras in einer Form einer 2x3-, 2x4-, 2x5-, 3x2-, 3x3-, 3x4-, 3x5- oder 4x4-Anordnung vorgesehen sind, um mindestens eine Vier-Kamera-Gruppe zu bilden.

3. Dreidimensionales Merkmalspunkt-Messsystem einer planaren Anordnung einer Vier-Kamera-Gruppe nach einem der Ansprüche 1-2, **dadurch gekennzeichnet, dass** bei der Vier-Kamera-Gruppe die Kameras Sensoren eines Typs von 2/3"-CMOS, eine Pixelabmessung von 5,5 $\mu$m, eine Auflösung von 1024x 2048 und eine Brennweite der Linse von 25 mm haben.

4. Dreidimensionales Merkmalspunkt-Messsystem einer planaren Anordnung einer Vier-Kamera-Gruppe nach einem der Ansprüche 1-2, **dadurch gekennzeichnet, dass** in der Vier-Kamera-Gruppe ein Abstand zwischen zwei benachbarten Kameras in einer horizontalen Richtung m ist, und ein Abstand zwischen zwei benachbarten Kameras in einer vertikalen Richtung ist n, wobei ein Bereich von m 50-100 mm ist, und ein Bereich von n ist 50-100 mm.

5. Messverfahren, das das dreidimensionale Messsystem nach Anspruch 1 verwendet, **dadurch gekennzeichnet, dass** es die folgenden speziellen Schritte umfasst:

Schritt 1: Einrichten eines Messsystems nach Anspruch 1; wobei die Abmessungen der Rechteckform und die Parameter der Kameras und der Linsen auf der Basis der Genauigkeit des Messsystems und einer Größe eines gemessenen Objektes ausgewählt werden, sodass wenn eine hohe Messgenauigkeit erforderlich ist, die Auflösung der Kameras verbessert wird und die Brennweite der Linsen erhöht wird; gleichzeitig wird dafür gesorgt, dass das gemessene Objekt in der Lage ist, gleichzeitig entsprechende Bildgebungspunkte auf den vier Kameras zu haben, wobei wenn das gemessene Objekt außerhalb des Bildgebungsbereichs liegt, die Messkameras paarweise erhöht werden, um mehrere Vier-Kamera-Gruppen zu bilden, und jedes Paar von Kameras nimmt an Operationen von zwei anderen Paaren von Kameras, die hieran angrenzen, teil;

Schritt 2: nachdem die Erfassung von Bildern abgeschlossen ist, Ausführen einer Anpassungsoperation für Merkmalspunkte der Bilder der Kameragruppe, wobei bei der Ausführung der Anpassungsoperation die volle Anpassung für die Merkmalspunkte des gemessenen Objektes durch Verschieben, Überlagern und Vergleichen, Punkt für Punkt, der Pixelpunkte von gemessenen Bildern von zwei Paaren von horizontalen Kameras und zwei Paaren von vertikalen Kameras in einer horizontalen Richtung und in einer vertikalen Richtung ausgeführt wird;

bei der Anpassungsoperation ist es erforderlich, die Anpassungsoperation an den Bildern der Vier-Kamera-Gruppe vorzunehmen, wobei alle Merkmalspunkte herausgefunden werden, deren räumliche Lage berechnet werden muss, und wenn eine Kameraanordnung, die mehr als vier Kameras hat, für die Messung verwendet wird, müssen verschiedene Anpassungsoperationen in entsprechenden verschiedenen Vier-Kamera-Gruppen ausgeführt werden;

Schritt 3: entsprechend den angepassten Merkmalspunkt-Bildkoordinaten, Berechnen von Koordinaten einer räumlichen Lage des Merkmalspunktes, wobei

die angepassten Merkmalspunkt-Bildkoordinaten in Koordinatenausdrücke von jedem Merkmalspunkt PN in einem Raum des gemessenen Objektes gesetzt werden, um Koordinaten der räumlichen Lagen der entsprechenden Merkmalspunkte zu berechnen;

gemäß der Berechnungsformel für die räumliche Lage des Merkmalspunktes, wird eine Breitenabmessung des gemessenen Objektes berechnet durch angepasste Merkmalspunkte zwischen zwei Paaren von horizontalen Kameras, eine Höhenabmessung des gemessenen Objektes wird berechnet durch angepasste Merkmalspunkte zwischen zwei Paaren von vertikalen Kameras, und eine Längenabmessung des gemessenen Objektes wird durch angepasste Merkmalspunkte zwischen zwei Paaren von horizontalen Kameras und zwei Paaren von vertikalen Kameras berechnet, wobei alle Abmessungen oben, die ein redundantes Merkmal haben, mit redundanten Daten verglichen und analysiert werden, was die Messgenauigkeit und die Präzisionsrate verbessert;

Schritt 4: gemäß den erhaltenen Koordinaten der räumlichen Lagen von entsprechenden Merkmalspunkten, Berechnung anderer dreidimensionaler Abmessungen des gemessenen Objektes, die speziell gemessen werden müssen, um dreidimensionale Punktwolkendaten zu bilden und ein dreidimensionales Punktwolkendiagramm zum Ausführen der dreidimensionalen stereoskopischen Reproduktion zu erstellen,

wobei das Messsystem ferner mindestens einen vertikalen Laser und mindestens einen horizontalen Laser umfasst, wobei der vertikale Laser dafür ausgelegt ist, auf einer senkrechten Winkelhalbierenden einer Verbindungslinie von $O_a$ und $O_b$ positioniert zu werden, und der horizontale Laser ist dafür ausgelegt, auf einer senkrechten Winkelhalbierenden einer Verbindungslinie von $O_a$ und $O_c$ positioniert zu werden.

6. Messverfahren nach Anspruch 5, **dadurch gekennzeichnet, dass** bei Schritt 1 Parameter der Kameras und der Linsen und die Längen- und Breitenabmessungen der Rechteckform derart ausgewählt werden, dass, wenn ein Messabstand unverändert ist, gilt, dass je größer ein Volumen des gemessenen Objektes ist, desto kürzer werden die Brennweiten durch die Linsen gefordert; wenn der Messabstand erhöht ist, ist ein Messbereich entsprechend vergrößert,

wobei eine Messauflösung verbessert wird in einem Bereich von: Verbessern der Auflösungen der Kameras, Verringern des Messabstandes, und unter der Bedingung, dass der Messabstand unverändert ist, Verringern von Werten der Brennweiten und Vergrößern der Abmessungen einer Anordnung von Mitteln der optischen Achsen der Vier-Kamera-Gruppe.

7. Messverfahren nach Anspruch 5, **dadurch gekennzeichnet, dass** in Schritt 3, gemäß den angepassten Merkmalspunkt-Bildkoordinaten, die Formeln zum Berechnen von Koordinaten der räumlichen Lage des Merkmalspunktes sind:

bei einem zentralen Punkt O einer Rechteckebene der Brennpunkte $O_a$, $O_b$, $O_c$ und $O_d$ einer Gruppe von vier Kameras, die Kamera a, die Kamera b, die Kamera c und die Kamera d, die als Ursprung dienen, ein dreieckiges Koordinatensystem des Raums des gemessenen Objektes festlegen, wobei X eine horizontale Richtung ist, Y eine vertikale Richtung ist und Z eine Längen- oder Tiefenrichtung ist;

Koordinaten einer räumlichen Lage eines selben Punktes, Punkt $P_1$, des gemessenen Objektes sind $P_1(P_{1x}, P_{1y}, P_{1z})$ und entsprechende Bildgebungspunkte der räumlichen dreidimensionalen Koordinaten des Punktes $P_1$ in der Gruppe von vier Kameras, der Kamera a, der Kamera b, der Kamera c und der Kamera d sind $P_{1a}(P_{1ax}, P_{1ay})$, $P_{1b}(P_{1bx}, P_{1by})$, $P_{1c}(P_{1cx}, P_{1cy})$, and $P_{1d}(P_{1dx}, P_{1dy})$, die relationalen Ausdrücke für die Ortskoordinaten sind folgende:

eine horizontale Betriebsformel der Kamera a und der Kamera b:

$$P_{1x} = \frac{m\,(\,P_{1ax} + P_{1bx}\,)}{2\,(\,P_{1bx} - P_{1ax}\,)}$$

eine horizontale Betriebsformel der Kamera c und der Kamera d:

$$P_{1x} = \frac{m\,(\,P_{1cx} + P_{1dx}\,)}{2\,(\,P_{1dx} - P_{1cx}\,)}\Big|_,$$

eine vertikale Betriebsformel der Kamera a und der Kamera c:

$$P_{1y} = \frac{n\left(P_{1cy} + P_{1ay}\right)}{2\left(P_{1cy} - P_{1ay}\right)},$$

eine vertikale Betriebsformel der Kamera b und der Kamera d:

$$P_{1y} = \frac{n\left(P_{1by} + P_{1dy}\right)}{2\left(P_{1dy} - P_{1by}\right)},$$

eine Tiefenbetriebsformel der Kamera a und der Kamera b:

$$P_{1z} = \frac{mf}{P_{1ax} - P_{1bx}},$$

eine Tiefenbetriebsformel der Kamera c und der Kamera d:

$$P_{1z} = \frac{mf}{P_{1cx} - P_{1dx}},$$

eine Tiefenbetriebsformel der Kamera a und der Kamera c:

$$P_{1z} = \frac{nf}{P_{1by} - P_{1dy}},$$

eine Tiefenbetriebsformel der Kamera b und der Kamera d:

$$P_{1z} = \frac{nf}{P_{1by} - P_{1dy}},$$

wobei m eine $O_aO_b$-Länge ist und n eine $O_aO_c$-Länge der Rechteckebene ist, und f ist die Brennweite der vier Kameras.

8. Messverfahren nach Anspruch 5, **dadurch gekennzeichnet, dass** in Schritt 3, ein allgemeiner Ausdruck zum Berechnen von Koordinaten eines Merkmalspunktes, die räumlichen Ortskoordinaten von $P_N$, ist:

$$P_N\left(P_{Nx}, P_{Ny}, P_{Nz}\right), \text{ wobei } N=1,2,3,4,5,\ldots\ldots$$

$$= \begin{cases} P_{Nx} = \dfrac{m\left(P_{Nax}+P_{Nbx}\right)}{2\left(P_{Nbx}-P_{Nax}\right)} = \dfrac{m\left(P_{Ncx}+P_{Ndx}\right)}{2\left(P_{Ndx}-P_{Ncx}\right)} \\[2ex] P_{Ny} = \dfrac{n\left(P_{Ncy}+P_{Nay}\right)}{2\left(P_{Ncy}-P_{Nay}\right)} = \dfrac{n\left(P_{Nby}+P_{Ndy}\right)}{2\left(P_{Ndy}-P_{Nby}\right)} \\[2ex] P_{Nz} = \dfrac{mf}{P_{Nax}-P_{Nbx}} = \dfrac{mf}{P_{Ncx}-P_{Ndx}} = \dfrac{nf}{P_{Nay}-P_{Ncy}} = \dfrac{nf}{P_{Nby}-P_{Ndy}} \end{cases},$$

dabei gilt

es seien die Brennpunkte der vier Kameras, der Kamera a, der Kamera b, der Kamera c und der Kamera d, $O_a$, $O_b$, $O_c$ und $O_d$ in derselben Ebene, und diese bilden eine Rechteckebene, wobei die $O_aO_b$-Länge der Rechteckebene m sei, und die $O_aO_c$-Länge sei n, und die optischen Achsen der vier Kameras sind parallel zueinander und senkrecht zur Rechteckebene; die Gruppe von vier Kameras, die Kamera a, die Kamera b, die Kamera c und die Kamera d, verwenden identisches CCD für die Bildgebung und auch identische Linsen, wobei die Brennweite der vier Kameras gleich f gesetzt sei;

Festlegung eines rechteckigen Koordinatensystems des Raums des gemessenen Objektes, wobei der Mittelpunkt 0 der rechteckigen Ebene von $O_a$, $O_b$, $O_c$ und $O_d$ als Ursprung festgelegt wird, wobei X eine horizontale Richtung parallel zu einer Kante $O_aO_b$ der Rechteckform ist, Y ist eine vertikale Richtung parallel zu einer Kante $O_aO_c$ der Rechteckform, und Z ist eine Längen- oder Tiefenrichtung und zeigt zum gemessenen Objekt;

jeder Merkmalspunkt im gemessenen Objekt sei PN, und Koordinaten von Projektionspunkten von PN auf Bildgebungsebenen der Gruppe von vier Kameras, der Kamera a, der Kamera b, der Kamera c und der Kamera d, seien $P_{Na}$ ($P_{Nax}$, $P_{Nay}$), $P_{Nb}$ ($P_{Nbx}$, $P_{Nby}$), $P_{Nc}$ ($P_{Ncx}$, $P_{Ncy}$) Und $P_{Nd}$ ($P_{Ndx}$, $P_{Ndy}$), und dann seien die Koordinaten eines räumlichen Ortes des Punktes $P_N$ $P_N$ ($P_{Nx}$, $P_{Ny}$, $P_{Nz}$).

## Revendications

1. Système de mesure en trois dimensions de point caractéristique d'un réseau planaire d'appareils de prise de vues numériques identiques disposés en deux paires ou plus de façon à former un ou plusieurs groupes de quatre appareils de prise de vues, dans lequel

    chaque groupe de quatre appareils de prise de vues est disposé sous la forme d'un réseau 2x2,

    lorsqu'une paire d'appareils de prise de vues est adjacente à deux autres paires d'appareils de prise de vues dans la direction horizontale ou verticale, cette paire d'appareils de prise de vues fait partie de deux groupes de quatre appareils de prise de vues formés respectivement par cette paire d'appareils de prise de vues et chacune des deux autres paires d'appareils de prise de vues adjacentes ;

    chaque groupe de quatre appareils de prise de vues comprend un appareil de prise de vues a, un appareil de prise de vues b, un appareil de prise de vues c, et un appareil de prise de vues d, dans lequel

    l'appareil de prise de vues a, l'appareil de prise de vues b, l'appareil de prise de vues c et l'appareil de prise de vues d sont disposés sur un même plan ;

    des points focaux $O_a$, $O_b$, $O_c$ et $O_d$ sur les axes optiques d'imagerie des quatre appareils de prise de vues, de l'appareil de prise de vues a, de l'appareil de prise de vues b, de l'appareil de prise de vues c et de l'appareil de prise de vues d se trouvent sur un même plan et forment une forme rectangulaire, qui forme un plan rectangulaire ;

    toutes les lignes centrales des axes optiques d'imagerie des quatre appareils de prise de vues, de l'appareil de prise de vues a, de l'appareil de prise de vues b, de l'appareil de prise de vues c et de l'appareil de prise de vues d sont perpendiculaires au plan rectangulaire ;

    les quatre appareils de prise de vues, l'appareil de prise de vues a, l'appareil de prise de vues b, l'appareil de prise de vues c et l'appareil de prise de vues d sont des modèles identiques et possèdent des lentilles identiques ;

    l'appareil de prise de vues a est situé à un emplacement horizontal par rapport à l'appareil de prise de vues b, et l'appareil de prise de vues c est situé à un emplacement horizontal par rapport à l'appareil de prise de vues d ;

    l'appareil de prise de vues a est situé à un emplacement vertical par rapport à l'appareil de prise de vues c et l'appareil de prise de vues b est situé à un emplacement vertical par rapport à l'appareil de prise de vues d ;

    les quatre appareils de prise de vues possèdent des champs de vision qui se chevauchent de sorte que l'objet mesuré puisse avoir simultanément des points d'imagerie correspondants sur les quatre appareils de prise de vues ;

    dans lequel le système de mesure en trois dimensions de point caractéristique comprend en outre au moins un laser vertical et au moins un laser horizontal, dans lequel le laser vertical est configuré pour être situé sur une bissectrice perpendiculaire d'une ligne de jonction de $O_a$ et $O_b$, et le laser horizontal est configuré pour être situé sur une bissectrice perpendiculaire d'une ligne de jonction de $O_a$ et $O_c$.

2. Système de mesure en trois dimensions de point caractéristique d'un réseau planaire d'un groupe de quatre appareils de prise de vues selon la revendication 1, **caractérisé en ce que** les quatre appareils de prise de vues ou plus sont prévus sous une forme d'un réseau 2x3, 2x4, 2x5, 3x2, 3x3, 3x4, 3x5 ou 4x4, afin de former au moins un groupe de quatre appareils de prise de vues.

3. Système de mesure en trois dimensions de point caractéristique d'un réseau planaire d'un groupe de quatre appareils de prise de vues selon l'une quelconque des revendications 1 à 2, **caractérisé en ce que**, dans le groupe de quatre appareils de prise de vues, les appareils de prise de vues possèdent des capteurs de type CMOS 2/3'', une dimension de pixels de 5,5 $\mu$m, une résolution de 1024x2048, et une longueur focale de lentille de 25 millimètres.

4. Système de mesure en trois dimensions de point caractéristique d'un réseau planaire d'un groupe de quatre appareils de prise de vues selon l'une quelconque des revendications 1 à 2, **caractérisé en ce que**, dans le groupe de quatre appareils de prise de vues, une distance entre deux appareils de prise de vues adjacents dans une direction horizontale est m, et une distance entre deux appareils de prise de vues adjacents dans une direction verticale est n, dans lequel une plage de la distance m est de 50 à 100 millimètres, et une plage de la distance n est de 50 à 100 millimètres.

5. Procédé de mesure qui utilise le système de mesure en trois dimensions selon la revendication 1, **caractérisé en ce qu'**il comprend les étapes spécifiques suivantes :

étape 1 : établissement d'un système de mesure selon la revendication 1 ; dans lequel

les dimensions de la forme rectangulaire et les paramètres des appareils de prise de vues et des lentilles sont sélectionnés sur la base de la précision du système de mesure et d'une taille d'un objet mesuré, de sorte que, lorsqu'une précision de mesure élevée est nécessaire, la résolution des appareils de prise de vues soit améliorée et la longueur focale des lentilles soit augmentée ; en même temps, l'objet mesuré est assuré de pouvoir avoir simultanément des points d'imagerie correspondants sur les quatre appareils de prise de vues, dans lequel, si l'objet mesuré se trouve en-dehors de la plage d'imagerie, les appareils de prise de vues de mesure sont augmentés par paires, afin de former plusieurs groupes de quatre appareils de prise de vues, et chaque paire d'appareils de prise de vues participe aux opérations des deux autres paires d'appareils de prise de vues adjacentes, respectivement ;

étape 2 : une fois l'acquisition des images terminée, l'exécution d'une opération de comparaison des points caractéristiques des images du groupe d'appareils de prise de vues, dans lequel

lors de l'exécution de l'opération de comparaison, une comparaison complète est effectuée pour les points caractéristiques de l'objet mesuré en translatant, superposant et comparant, point par point, les points de pixels des images mesurées des deux paires d'appareils de prise de vues horizontaux et des deux paires d'appareils de prise de vues verticaux dans une direction horizontale et dans une direction verticale ;

lors de l'opération de comparaison, il est nécessaire d'effectuer l'opération de comparaison sur les images du groupe de quatre appareils de prise de vues, en recherchant tous les points caractéristiques dont les emplacements spatiaux doivent être calculés, et, si un réseau d'appareils de prise de vues qui possède plus de quatre appareils de prise de vues est utilisé pour la mesure, des opérations de comparaison différentes doivent être effectuées dans différents groupes de quatre appareils de prise de vues respectivement ;

étape 3 : selon les coordonnées de l'image de points caractéristiques comparée, le calcul des coordonnées d'un emplacement spatial du point caractéristique, dans lequel

les coordonnées de l'image du point caractéristique comparée sont placées dans des expressions de coordonnées de n'importe quel point caractéristique $P_N$ dans un espace de l'objet mesuré, afin de calculer les cordonnées des emplacements spatiaux des points caractéristiques respectifs ;

selon les formules de calcul de l'emplacement spatial du point caractéristique, une dimension de largeur de l'objet mesuré est calculée par le biais des points caractéristiques comparés entre deux paires d'appareils de prise de vues horizontaux, une dimension de hauteur de l'objet mesuré est calculée par le biais des points caractéristiques comparés entre deux paires d'appareils de prise de vues verticaux, et une dimension de longueur de l'objet mesuré est calculée par le biais des points caractéristiques comparés entre deux paires d'appareils de prise de vues horizontaux et deux paires d'appareils de prise de vues verticaux, dans lequel toutes les dimensions ci-dessus, qui présentent une redondance, sont comparées et analysées sur des données redondantes, afin d'améliorer la précision de mesure et le taux de précision ;

étape 4 : selon les coordonnées obtenues des emplacements spatiaux des points caractéristiques respectifs, le calcul d'autres dimensions en trois dimensions de l'objet mesuré qui doivent être spécialement mesurées afin de former des données de nuage de points en trois dimensions et d'établir un graphique de nuage de points en trois dimensions pour effectuer une reproduction stéréoscopique en trois dimensions,

dans lequel le système de mesure comprend en outre au moins un laser vertical et au moins un laser horizontal, dans lequel le laser vertical est configuré pour être situé sur une bissectrice perpendiculaire d'une ligne de jonction de $O_a$ et $O_b$, et le laser horizontal est configuré pour être situé sur une bissectrice perpendiculaire d'une ligne de jonction de $O_a$ et $O_c$.

6. Procédé de mesure selon la revendication 5, **caractérisé en ce que**, à l'étape 1, les paramètres des appareils de prise de vues et des lentilles, et les dimensions de longueur et de largeur de la forme rectangulaire sont sélectionnés de sorte que

lorsqu'une distance de mesure est inchangée, plus un volume de l'objet mesuré est important, plus les longueurs focales requises par les lentilles soient courtes ; lorsque la distance de mesure est augmentée, une plage mesurable est également augmentée en conséquence,

dans lequel une résolution de mesure est améliorée en : améliorant les résolutions des appareils de prise de vues, en réduisant la distance de mesure, et, à condition que la distance de mesure soit inchangée, en réduisant les valeurs des longueurs focales, et en augmentant les dimensions d'un ensemble de centres des axes optiques du groupe de quatre appareils de prise de vues.

7. Procédé de mesure selon la revendication 5, **caractérisé en ce que**, à l'étape 3, selon les coordonnées de l'image de points caractéristiques comparée, les formules de calcul des coordonnées de l'emplacement spatial du point caractéristique sont :

avec un point central O d'un plan rectangulaire des points focaux $O_a$, $O_b$, $O_c$ et $O_d$ d'un groupe de quatre appareils de prise de vues, de l'appareil de prise de vues a, de l'appareil de prise de vues b, de l'appareil de prise de vues c et de l'appareil de prise de vues d, qui sert d'origine, la définition d'un système de coordonnées triangulaires de l'espace de l'objet mesuré, dans lequel X est une direction horizontale, Y est une direction verticale, et Z est une direction de longueur ou de profondeur ;

les coordonnées d'un emplacement spatial d'un même point, le point $P_1$, de l'objet mesuré sont $P_1(P_{1x}, P_{1y}, P_{1z})$, et les points d'imagerie correspondants des coordonnées spatiales en trois dimensions du point $P_1$ dans le groupe de quatre appareils de prise de vues, de l'appareil de prise de vues a, de l'appareil de prise de vues b, de l'appareil de prise de vues c et de l'appareil de prise de vues d sont $P_{1a}(P_{1ax}, P_{1ay})$, $P_{1b}(P_{1bx}, P_{1by})$, $P_{1c}(P_{1cx}, P_{1cy})$, et $P_{1d}(P_{1dx}, P_{1dy})$, les expressions relationnelles des coordonnées d'emplacement, sont les suivants :

une formule de fonctionnement horizontal de l'appareil de prise de vues a et de l'appareil de prise de vues b :

$$P_{1x} = \frac{m\,(\,P_{1ax} + P_{1bx}\,)}{2\,(\,P_{1bx} - P_{1ax}\,)},$$

une formule de fonctionnement horizontal de l'appareil de prise de vues c et de l'appareil de prise de vues d :

$$P_{1x} = \frac{m\,(\,P_{1cx} + P_{1dx}\,)}{2\,(\,P_{1dx} - P_{1cx}\,)},$$

une formule de fonctionnement vertical de l'appareil de prise de vues a et de l'appareil de prise de vues c :

$$P_{1y} = \frac{n\,(\,P_{1cy} + P_{1ay}\,)}{2\,(\,P_{1cy} - P_{1ay}\,)},$$

une formule de fonctionnement vertical de l'appareil de prise de vues b et de l'appareil de prise de vues d :

$$P_{1y} = \frac{n\,(\,P_{1by} + P_{1dy}\,)}{2\,(\,P_{1dy} - P_{1by}\,)},$$

une formule de fonctionnement en profondeur de l'appareil de prise de vues a et de l'appareil de prise de vues b :

$$P_{1z} = \frac{mf}{P_{1ax} - P_{1bx}},$$

une formule de fonctionnement en profondeur de l'appareil de prise de vues c et de l'appareil de prise de vues d :

$$P_{1z} = \frac{mf}{P_{1cx} - P_{1dx}},$$

une formule de fonctionnement en profondeur de l'appareil de prise de vues a et de l'appareil de prise de vues c :

$$P_{1z} = \frac{nf}{P_{1by} - P_{1dy}},$$

une formule de fonctionnement en profondeur de l'appareil de prise de vues b et de l'appareil de prise de vues d :

$$P_{1z} = \frac{nf}{P_{1by} - P_{1dy}},$$

où m est une longueur $O_aO_b$ et n est une longueur $O_aO_c$ du plan rectangulaire, et f est la longueur focale des quatre appareils de prise de vues.

8. Procédé de mesure selon la revendication 5, **caractérisé en ce que**, à l'étape 3, une expression générale de calcul des coordonnées d'un point caractéristique, les coordonnées d'emplacement spatial de $P_N$, est :

$$P_N (P_{Nx}, P_{Ny}, P_{Nz}), \quad \text{où} \quad N=1,2,3,4,5,\ldots\ldots$$

$$= \begin{cases} P_{Nx} = \dfrac{m\left(P_{Nax}+P_{Nbx}\right)}{2\left(P_{Nbx}-P_{Nax}\right)} = \dfrac{m\left(P_{Ncx}+P_{Ndx}\right)}{2\left(P_{Ndx}-P_{Ncx}\right)} \\[2mm] P_{Ny} = \dfrac{n\left(P_{Ncy}+P_{Nay}\right)}{2\left(P_{Ncy}-P_{Nay}\right)} = \dfrac{n\left(P_{Nby}+P_{Ndy}\right)}{2\left(P_{Ndy}-P_{Nby}\right)} \\[2mm] P_{Nz} = \dfrac{mf}{P_{Nax}-P_{Nbx}} = \dfrac{mf}{P_{Ncx}-P_{Ndx}} = \dfrac{nf}{P_{Nay}-P_{Ncy}} = \dfrac{nf}{P_{Nby}-P_{Ndy}} \end{cases},$$

où

les points focaux des quatre appareils de prise de vues, de l'appareil de prise de vues a, de l'appareil de prise de vues b, de l'appareil de prise de vues c et de l'appareil de prise de vues d sont $O_a$, $O_b$, $O_c$ et $O_d$, dans lequel les points focaux $O_a$, $O_b$, $O_c$ et $O_d$ se trouvent sur un même plan et forment un plan rectangulaire, la longueur $O_aO_b$ du plan rectangulaire est m, et la longueur $O_aO_c$ est n, et les axes optiques des quatre appareils de prise de vues sont parallèles les uns aux autres et perpendiculaires au plan rectangulaire ; le groupe de quatre appareils de prise de vues, l'appareil de prise de vues a, l'appareil de prise de vues b, l'appareil de prise de vues c et l'appareil de prise de vues d utilisent un CCD identique pour l'imagerie, et des lentilles identiques, avec la longueur focale des quatre appareils de prise de vues qui est f ;

la définition d'un système de coordonnées rectangulaires de l'espace de l'objet mesuré, en prenant le point central 0 du plan rectangulaire de $O_a$, $O_b$, $O_c$ et $O_d$ comme origine, où X est une direction horizontale parallèle à un bord $O_aO_b$ de la forme rectangulaire, Y est une direction verticale parallèle à un bord $O_aO_c$ de la forme rectangulaire, et Z est une direction de longueur ou de profondeur et pointe vers l'objet mesuré ;

n'importe quel point caractéristique sur l'objet mesuré est $P_N$, et les coordonnées des points de projection de $P_N$

sur les plans d'imagerie du groupe de quatre appareils de prise de vues, de l'appareil de prise de vues a, de l'appareil de prise de vues b, de l'appareil de prise de vues c et de l'appareil de prise de vues d sont $P_{Na}(P_{Nax}, P_{Nay})$, $P_{Nb}(P_{Nbx}, P_{Nby})$, $P_{Nc}(P_{Ncx}, P_{Ncy})$, et $P_{Nd}(P_{Ndx}, P_{Ndy})$, et les coordonnées d'un emplacement spatial du point $P_N$ sont $PN(P_{Nx}, P_{Ny}, P_{Nz})$.

vertical laser

camera a

camera b

horizontal laser

camera c

camera d

Fig. 1

vertical laser

horizontal laser camera a

camera b

axis of camera a
axis of camera b

axis of camera c
axis of camera d

camera c

camera d

Fig. 2

Fig. 3

Fig. 4

Fig. 5

Fig. 6

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102447934 B
- US 2010150455 A1
- US 2015042767 A1
- WO 2011118839 A1
- US 2014267245 A1
- CN 104748683 A